(19) Europäisches Patentamt
European Patent Office
Office européen des brevets

(11) **EP 4 160 445 A1**

(12) **EUROPEAN PATENT APPLICATION**

(43) Date of publication:
**05.04.2023 Bulletin 2023/14**

(51) International Patent Classification (IPC):
**G06F 16/48** (2019.01)

(21) Application number: **22178202.2**

(52) Cooperative Patent Classification (CPC):
**G06F 16/48**

(22) Date of filing: **09.06.2022**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 CN 202111150685**

(71) Applicant: **Beijing Dajia Internet Information Technology Co., Ltd.**
**Beijing 100085 (CN)**

(72) Inventors:
• **TANG, Bo**
  **Beijing, 100085 (CN)**
• **YANG, Wenbo**
  **Beijing, 100085 (CN)**
• **LI, Shaozhe**
  **Beijing, 100085 (CN)**

(74) Representative: **Yang, Shu et al**
**Withers & Rogers LLP**
**2 London Bridge**
**London SE1 9RA (GB)**

(54) **METHOD AND APPARATUS FOR RECOMMENDING MULTIMEDIA RESOURCE, AND COMPUTER PROGRAM PRODUCT**

(57)    Provided is a method for recommending a multimedia resource, including: acquiring account information and a recommendation parameter corresponding to the account information, acquiring a target parameter of each multimedia resource based on the account information, the recommendation parameter and resource information of a plurality of multimedia resources to be recommended, determining at least one multimedia resource with a largest target parameter in the plurality of multimedia resources as a target multimedia resource, and recommending the target multimedia resource to a target account.

Acquiring, by an electronic device, account information and a recommendation parameter corresponding to the account information — 201

Acquiring, by the electronic device, a target parameter of each multimedia resource based on the account information, the recommendation parameter and resource information of a plurality of multimedia resources to be recommended — 202

Determining, by the electronic device, at least one multimedia resource with a largest target parameter in the plurality of multimedia resources as a target multimedia resource — 203

Recommending, by the electronic device, the target multimedia resource to a target account — 204

FIG. 2

**Description**

**TECHNICAL FIELD**

The present disclosure relates to the field of computer technologies, and in particular, to a method and an apparatus for recommending a multimedia resource and a computer program product.

**BACKGROUND**

With the development of Internet technologies, there are more and more multimedia resources in the Internet. A plurality of multimedia resources are stored in each resource display platform, and the multimedia resources are usually recommended to an account, so that a user to which the account belongs can view the recommended multimedia resources.

**SUMMARY**

The present disclosure provides a method and an apparatus for recommending a multimedia resource and a computer program product.

According to an aspect of embodiments of the present disclosure, a method for recommending a multimedia resource is provided. The method includes:

acquiring account information and a recommendation parameter corresponding to the account information;
acquiring a target parameter of each of a plurality of multimedia resources to be recommended based on the account information, the recommendation parameter and resource information of the plurality of multimedia resources, where the target parameter indicates a possibility that a terminal corresponding to the target account executes an operation on the multimedia resource in a case that the corresponding multimedia resource is recommended to a target account, and the target account is an account represented by the account information;
determining at least one multimedia resource with a largest target parameter in the plurality of multimedia resources as a target multimedia resource; and
recommending the target multimedia resource to the target account.

According to another aspect of the embodiments of the present disclosure, an apparatus for recommending a multimedia resource is provided. The apparatus for recommending a multimedia resource includes:

an acquisition unit, configured to acquire account information and a recommendation parameter corresponding to the account information;
the acquisition unit is further configured to acquire a target parameter of each of a plurality of multimedia resources to be recommended based on the account information, the recommendation parameter and resource information of the plurality of multimedia resources, where the target parameter indicates, a possibility that a terminal corresponding to the target account executes an operation on the multimedia resource in a case that the corresponding multimedia resource is recommended to a target account, and the target account is an account represented by the account information;
a selection unit, configured to determine at least one multimedia resource with a largest target parameter in the plurality of multimedia resources as a target multimedia resource; and
a recommendation unit, configured to recommend the target multimedia resource to the target account.

According to yet another aspect of the embodiments of the present disclosure, a computer program product is provided. The program is executed by a processor to execute the following steps:

acquiring account information and a recommendation parameter corresponding to the account information;
acquiring a target parameter of each of a plurality of multimedia resources to be recommended based on the account information, the recommendation parameter and resource information of the plurality of multimedia resources, where the target parameter indicates a possibility that a terminal corresponding to the target account executes an operation on the multimedia resource in a case that the corresponding multimedia resource is recommended to a target account, and the target account is an account represented by the account information;
determining at least one multimedia resource with a largest target parameter in the plurality of multimedia resources as a target multimedia resource; and
recommending the target multimedia resource to the target account.

## BRIEF DESCRIPTION OF THE DRAWINGS

FIG. 1 is a schematic diagram of an implementation environment according to an exemplary embodiment;
FIG. 2 is a flowchart of a method for recommending a multimedia resource according to an exemplary embodiment;
FIG. 3 is a flowchart of another method for recommending a multimedia resource according to an exemplary embodiment;
FIG. 4 is a schematic structural diagram of a recommendation model according to an exemplary embodiment;
FIG. 5 is a flowchart of advertisement recommendation according to an exemplary embodiment;
FIG. 6 is a flowchart of a method for training a recommendation model according to an exemplary embodiment;
FIG. 7 is a flowchart of a method for recommending a multimedia resource according to an exemplary embodiment;
FIG. 8 is a block diagram of an apparatus for recommending a multimedia resource according to an exemplary embodiment;
FIG. 9 is a block diagram of another apparatus for recommending a multimedia resource according to an exemplary embodiment;
FIG. 10 is a block diagram of a terminal according to an exemplary embodiment; and
FIG. 11 is a block diagram of a server according to an exemplary embodiment.

## DETAILED DESCRIPTION

For terms of "at least one", "plurality", "each" and "any" used in the present disclosure, the term of "at least one" includes one, two or more, the term of "plurality" includes two or more, while the term of "each" refers to each of the plurality, and the term of "any" refers to any one of the plurality. For example, a plurality of accounts include 3 accounts, each refers to each of the 3 accounts, and any refers to any one of the 3 accounts, which can be the first account, or the second account, or the third account.

It should be noted that account information (including but not limited to user equipment information, user personal information, etc.) involved in the present disclosure is the information authorized by a user or fully authorized by all parties.

The method for recommending a multimedia resource according to embodiments of the present disclosure is executed by an electronic device. In some embodiments, the electronic device is a terminal, for example, the terminal is a mobile phone, a tablet computer, a computer, and other types of terminals. In some embodiments, the electronic device is a server, for example, the server is one server, or a server cluster consisting of several servers, or a cloud computing service center.

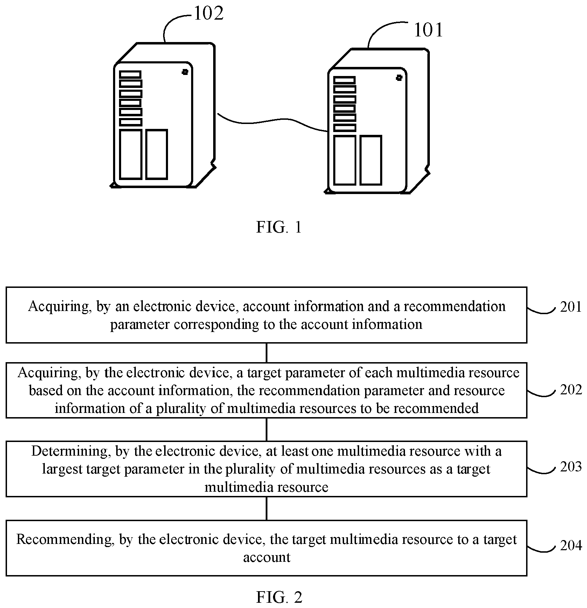

In some embodiments, the electronic device is provided as a central server. FIG. 1 is a schematic diagram of an implementation environment provided according to an exemplary embodiment, and the implementation environment includes: a central server 101 and at least one application server 102, and the central server 101 and each application server 102 can interact through network connection.

The central server 101 can provide a multimedia resource recommendation service for each application server 102. For each application server 102, the central server 101 can determine a target multimedia resource for an account based on a recommendation parameter of the application server 102, account information and resource information of a plurality of multimedia resources to be recommended. The central server 101 sends the target multimedia resource to the application server 102 through the network connection with the application server 102, and the application server 102 recommends the target multimedia resource to the account through. The account information is information corresponding to the account logging in to the application server 102, and the plurality of multimedia resources are multimedia resources in the central server 101.

In some embodiments, for any application server 102, when a user logs in to the application server 102 based on the account, the application server 102 sends a resource acquisition request to the central server 101, the resource acquisition request carries the account information of the account and the recommendation parameter of the application server 102, after receiving the resource acquisition request, the central server 101 determines the target multimedia resource to be recommended for the account, and sends the target multimedia resource to the application server 102, and the target multimedia resource is recommended to this account by the application server 102.

FIG. 2 is a flowchart of a method for recommending a multimedia resource according to an exemplary embodiment. Referring to FIG. 2, the method is executed by an electronic device and includes the following steps.

**In step 201, an electronic device acquires account information and a recommendation parameter corresponding to the account information.**

The account information is configured to describe a target account, that is, the account information refers to the target account, and the recommendation parameter corresponding to the account information is configured to represent a recommendation situation of a multimedia resource matching the account information.

In step 202, the electronic device acquires a target parameter of each multimedia resource based on the account information, the recommendation parameter and resource information of a plurality of multimedia resources to be recommended.

The target parameter indicates a possibility that a terminal corresponding to the target account executes an operation on the multimedia resource in a case that the corresponding multimedia resource is recommended to the target account, and the terminal corresponding to the target account is a terminal to which the target account logs in.

Operations executed by the terminal corresponding to the target account on the multimedia resource are a click operation, a conversion operation, and the like. For example, the target parameter is an exposure conversion rate, and the exposure conversion rate indicates a possibility that the terminal corresponding to the target account executes the conversion operation on the multimedia resource in a case that the multimedia resource is recommended to the target account.

In the embodiment of the present disclosure, based on the account information of the target account, the recommendation parameter and the resource information of each multimedia resource, a possibility that the terminal corresponding to the target account executes the operation on the multimedia resource can be determined, in a case that each multimedia resource is recommended to the target account. That the terminal corresponding to the target account executes the operation on the multimedia resource indicates that a user corresponding to the target account is interested in the multimedia resource. Therefore, the target parameter can reflect an interest level of the user corresponding to the target account in the multimedia resource.

Since the account information and the recommendation parameter corresponding to the account information are integrated into the target parameter of each multimedia resource, the target parameter matches the target account to ensure that the multimedia resource can be subsequently recommended to the target account.

In step 203, the electronic device determines at least one multimedia resource with a largest target parameter in the plurality of multimedia resources as a target multimedia resource.

The target parameter of each multimedia resource represents a possibility that the target account executes the operation on each multimedia resource, that is, the target parameter can indicate the interest level of the target account in the multimedia resource. Therefore, the at least one multimedia resource with a largest target parameter is selected from the plurality of multimedia resources as the target multimedia resource, that is, at least one target multimedia resource of interest to the target account is selected, so that the target multimedia resource can be subsequently recommended to the target account, thereby ensuring a subsequent recommendation effect.

In step 204, the electronic device recommends the target multimedia resource to the target account.

Since the target multimedia resource is a multimedia resource of interest to the target account, the target multimedia resource of interest to the target account is recommended to the target account, so that the user can view the target multimedia resource and the recommendation effect is guaranteed.

The method according to the embodiment of the present disclosure introduces the recommendation parameter corresponding to the account information, and the recommendation parameter can embody the recommendation situation of a multimedia resource matching the account information. When the multimedia resource is recommended to the account, the target parameter of each multimedia resource is determined based on the account information, the recommendation parameter corresponding to the account information and the resource information of the plurality of the multimedia resources to be recommended. The recommendation situation of a multimedia resource matching the account information is taken into account, so that the target parameter matches the target account. The target parameter can indicate the interest level of the target account in the multimedia resource, so that the target multimedia resource of interest to the target account in the plurality of multimedia resources is recommended to the target account, which realizes the solution of customized recommendation for the account, thereby ensuring the recommendation effect.

On the basis of the embodiment shown in FIG. 2 above, a recommendation model may also be called to acquire the target parameter of each multimedia resource, and the recommendation model including a feature extraction sub-model, a click prediction sub-model, a conversion prediction sub-model, a fusion sub-model and a weight acquisition sub-model is taken as an example. For details of a recommendation process of the multimedia resource, refer to the following embodiment.

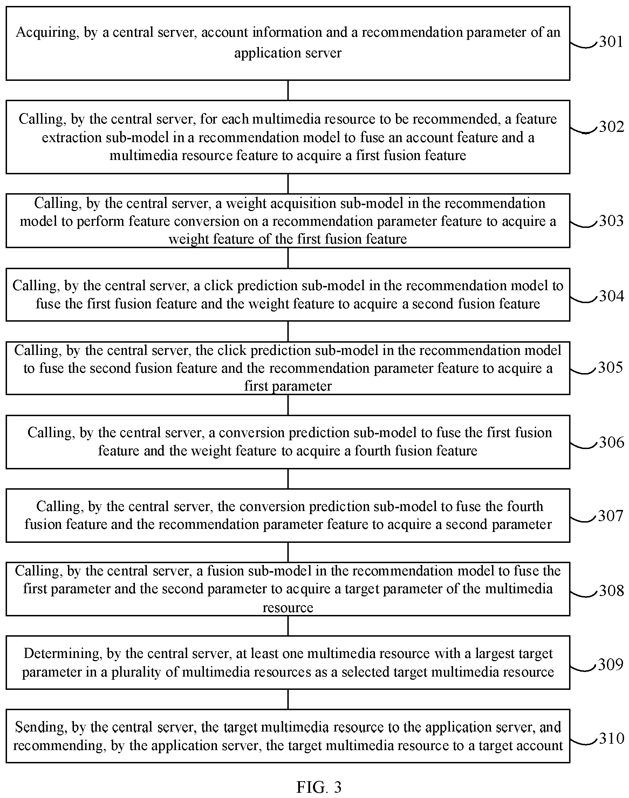

FIG. 3 is a flowchart of a method for recommending a multimedia resource according to an exemplary embodiment. Referring to FIG. 3, the method is executed by a central server and includes the following steps.

In step 301, a central server acquires account information and a recommendation parameter of an application server.

The account information refers to a target account of a resource to be recommended, the target account is an account logging in to the application server, and the recommendation parameter is determined based on the operation on the multimedia resource recommended by the application server and the operation is executed by at least one account logging in to the application server.

In the embodiment of the present disclosure, a recommendation service is provided to the application server by the central server, and the target account represented by target information is an account logging in to the application server, that is, the target account is an account registered in the application server. The recommendation parameter of the application server may be used as a recommendation parameter corresponding to each account logging in to the application server. In some embodiments, the application server is any one of a plurality of application servers that the central server provides recommendation service. Each application server provides the service for a resource display application, and each resource display application can display the multimedia resource.

The account information is configured to describe the target account logging in to the application server. In some embodiments, the account information includes the occupation, age, gender, hobbies, etc., of a user corresponding to the target account.

In the embodiment of the present disclosure, since the target account represented by the account information is the account logging in to the application server, the recommendation parameter of the application server is also a recommendation parameter corresponding to the account information. The recommendation parameter can reflect a situation that the account logging in to the application server executes an operation on the multimedia resource recommended by the application server, that is, can reflect a situation that the application server recommends the multimedia resource for the account logging in to the application server. In some embodiments, the recommendation parameter includes an exposure click-through rate or a click-through conversion rate of the multimedia resource. The exposure click-through rate indicates a situation that at least one account executes a click operation on the recommended multimedia resource, and the click-through conversion rate indicates a situation that at least one account executes the click operation on the recommended multimedia resource and then executes a conversion operation, wherein the at least one account is an account logging in to the application server, and the multimedia resource is recommended by the application server. In some embodiments, the recommendation parameter includes an exposure click-through rate or conversion rate belonging to different types of multimedia resources. For example, the application server can recommend the multimedia resource to each account logging in to the application server, and count operations executed by each account on the recommended multimedia resource, such as the click operation executed by each account on the multimedia resource or the conversion operation executed after the click operation, and the recommendation parameter of the application server can be acquired by counting the operations executed by each account on the recommended multimedia resource. In some embodiments, the recommendation parameter further includes a relevant parameter of the application server. The relevant parameter is a parameter relevant to the application server. For example, the application server is configured to provide a service for a target application, relevant parameter includes a click-through rate or a conversion rate corresponding to an application type, and the application type is a type to which the target application belongs.

In some embodiments, step 301 includes: sending, by the application server, a resource acquisition request to the central server, in which the resource acquisition request carries the account information and the recommendation parameter of the application server; and receiving, by the central server, the resource acquisition request.

In the embodiment of the present disclosure, the central server provides a recommendation service for the application server. Receiving the resource acquisition request sent by the application server means that the multimedia resource needs to be recommended to the target account logging in to the application server. A target multimedia resource to be recommended can be subsequently determined for the target account.

For example, after the terminal logs in to the application server based on the target account, the application server sends the resource acquisition request to the central server, so as to subsequently recommend the target multimedia resource to the target account.

For another example, the terminal sends a login request carrying the target account to the application server based on the target account, the application server receives the login request and verifies whether the target account is an account registered in the application server, sends the resource acquisition request to the central server if the verification is passed and sends a verification pass notification to the terminal, and the terminal receives the verification pass notification and displays a login success interface.

In some embodiments, step 301 includes: the application server sends the resource acquisition request carrying the account information and an initial recommendation parameter of the application server to the central server, the relevant parameter of the application server is acquired based on the initial recommendation parameter of the application server, , and the initial recommendation parameter and the relevant parameter are fused to acquire the recommendation parameter of the application server.

The relevant parameter relevant to the application server is acquired, and the relevant parameter and the initial recommendation parameter are fused, so as to ensure accuracy of the recommendation parameter and a subsequent recommendation effect.

It should be noted that, in the embodiment of the present disclosure, the recommendation parameter of the application server is taken as the recommendation parameter corresponding to the account information, while in another embodiment, the recommendation parameter corresponding to the account information may also be other recommendation parameters. For example, the other recommendation parameters are configured to indicate a situation that other account information similar to this account information executes an operation on the recommended multimedia resource, and the account information and the recommendation parameter corresponding to the account information can be acquired by other ways without the need of executing the step 301.

**In step 302, for each multimedia resource to be recommended, the central server calls a feature extraction sub-model in a recommendation model to fuse an account feature and a multimedia resource feature to acquire a first fusion feature.**

The account feature is configured to represent the account information of the target account, the account feature is a feature of the account information, the multimedia resource feature is a feature corresponding to the resource information of the multimedia resource, the multimedia resource feature is configured to represent the resource information of the multimedia resource, and the resource information of the multimedia resource is configured to describe the corresponding multimedia resource. In some embodiments, the resource information includes brief information of the multimedia resource or a resource recommendation parameter of the multimedia resource, the resource recommendation parameter is configured to describe a situation of recommending the multimedia resource, and the resource recommendation parameter is determined based on the operation executed by at least one account on the multimedia resource. For example, the resource recommendation parameter includes the exposure click-through rate or click-through conversion rate of the multimedia resource. For example, after the multimedia resource is recommended to at least one account, the exposure click-through rate of the multimedia resource can be determined based on whether the at least one account executes the click operation on the multimedia resource; after the at least one account executes the click operation on the multimedia resource, the click-through conversion rate of the multimedia resource is determined based on whether at least one account executes the conversion operation on the multimedia resource.

The first fusion feature is acquired based on the account feature and the multimedia resource feature corresponding to the multimedia resource, that is, the first fusion feature can represent the target account and the multimedia resource.

In the embodiment of the present disclosure, the central server stores the plurality of multimedia resources to be recommended, for example advertisements, videos, images, and the like. Based on the interaction between the central server and the application server, the multimedia resources stored in the central server can be recommended to the target account logging in to the application server, thereby realizing the effect that the central server provides a recommendation service for other servers.

In some embodiments, step 302 includes: calling the feature extraction sub-model, performing feature extraction on the account information and the resource information respectively to acquire the account feature and the multimedia resource feature, and joining the account feature and the multimedia resource feature to acquire the first fusion feature.

By joining the account feature and the multimedia resource feature, the first fusion feature acquired by the joining includes both the account feature and the multimedia resource feature, so as to facilitate the subsequent determination of the target parameter of the multimedia resource based on the first fusion feature.

In some embodiments, the first fusion feature is acquired by fusing the account feature, the multimedia resource feature and a relevant feature, that is, the process of acquiring the first fusion feature includes: calling the feature extraction sub-model, and acquiring the relevant feature based on the account information and the resource information of the multimedia resource; and calling the feature extraction sub-model to fuse the account feature, the multimedia resource feature and the relevant feature to acquire the first fusion feature.

The relevant feature indicates an interaction between the terminal corresponding to the target account and the multimedia resource, and also indicates an interaction between the terminal corresponding to the target account and other multimedia resources. The other multimedia resources are multimedia resources recommended by the central server other than the multimedia resource, that is, the other multimedia resources are multimedia resources recommended by the central server other than the multimedia resource to be recommended at this time. The relevant feature not only indicates the interaction between the target account and the multimedia resource, but also indicates the interaction between the target account and other multimedia resources. Therefore, the relevant feature is introduced to enrich the information contained in the first fusion feature and to ensure the accuracy of the target parameter subsequently acquired based on the first fusion feature, thereby ensuring the recommendation effect.

For example, this relevant feature can not only indicate whether the terminal corresponding to the target account has executed an operation on the multimedia resource, but also indicate the situation that in other multimedia resources recommended by the central server to the target account, the terminal corresponding to the target account executes the operation on other multimedia resources. For example, the relevant feature can reflect the exposure click-through rate or the click-through conversion rate corresponding to the target account. For example, the central server has recommended 10 multimedia resources to the target account, and the terminal corresponding to the target account executes the click operation on 6 multimedia resources, that is, the exposure click-through rate corresponding to the target account is 0.6; and in these 6 multimedia resources, the terminal corresponding to the target account executes the conversion operation on 3 multimedia resources, that is, the click-through conversion rate corresponding to the target account is 0.5.

In some embodiments, the process of acquiring the first fusion feature includes: acquiring relevant information based on the account information and the resource information of the multimedia resource, calling the feature extraction sub-model to perform feature extraction on the account information, the resource information of the multimedia resource and the relevant information respectively to acquire the account feature, the multimedia resource feature and the relevant feature, and joining the account feature, the multimedia resource feature and the relevant feature to acquire the first fusion feature.

The relevant information is configured to describe the interaction between the terminal corresponding to the target account and the multimedia resource, and can also describe the interaction between the terminal corresponding to the target account and other multimedia resources. For example, the relevant information includes the information configured to describe whether the target account has executed the click operation or conversion operation on the multimedia resource, or the click-through rates or conversion rates of the target account for other historically recommended multimedia resources, or the click-through rates and conversion rates of the target account for different types of multimedia resources, or the click-through rates or conversion rates of the multimedia resources on which the target account has executed the operation.

**In step 303, the central server calls a weight acquisition sub-model in the recommendation model to perform feature conversion on a recommendation parameter feature to acquire a weight feature of the first fusion feature**.

The recommendation parameter feature is a feature of the recommendation parameter. In the embodiment of the present disclosure, the recommendation model includes the weight acquisition sub-model, the weight acquisition sub-model is configured to acquire the weight feature of the first fusion feature, and the weight feature can indicate a degree of influence of the first fusion feature on the target parameter of the multimedia resource recommended by the application server. The recommendation parameter feature is configured to represent the recommendation parameter, and is configured to embody the situation that the application server recommends the multimedia resource to the account logging in to the application server.

In some embodiments, step 303 includes: the central server calls the feature extraction sub-model in the recommendation model to perform feature extraction on the recommendation parameter to acquire the recommendation parameter feature, and calls the weight acquisition sub-model to perform feature conversion on the recommendation parameter feature to acquire the weight feature.

The recommendation parameter is input into the feature extraction sub-model, the feature extraction sub-model outputs the recommendation parameter feature, and the recommendation parameter feature is inputted into the weight acquisition sub-model to acquire the weight feature.

In some embodiments, the recommendation model further includes the other feature extraction sub-model. For the convenience of distinction, the feature extraction sub-model configured to acquire the first fusion feature is called a first feature extraction sub-model, and the other feature extraction sub-model is called a second feature extraction sub-model, then step 303 includes: calling the second feature extraction sub-model to perform feature extraction on the recommendation parameter to acquire the recommendation parameter feature, and calling the weight acquisition sub-model to perform feature conversion on the recommendation parameter feature to acquire the weight feature.

In the embodiment of the present disclosure, the recommendation model includes the first feature extraction sub-model and the second feature extraction sub-model, the first feature extraction sub-model is configured to acquire the first fusion feature, and the second feature extraction sub-model is configured to acquire the recommendation parameter feature.

**In step 304, the central server calls a click prediction sub-model in the recommendation model to fuse the first fusion feature and the weight feature to acquire a second fusion feature.**

The click prediction sub-model is configured to acquire a first parameter which indicates a possibility that the terminal corresponding to the target account executes the click operation on the multimedia resource in a case that the multimedia resource is recommended to the target account. In the embodiment of the present disclosure, the first parameter also indicates a possibility that the terminal corresponding to the target account executes the click operation on the multimedia resource in a case that the application server recommends the multimedia resource to the target account. The click operation is a viewing operation on the multimedia resource executed by the terminal corresponding to the target account. After the click operation is executed on the multimedia resource, the terminal can display the multimedia resource for the user corresponding to the target account to view. For example, the first parameter is the exposure click-through rate, and the click prediction model is configured to acquire the exposure click-through rate. For example, the first parameter is a prediction click-through rate (PCTR).

In some embodiments, the weight acquisition sub-model includes n weight acquisition layers, the click prediction sub-model includes n first parameter acquisition layers and n first fusion layers, and an $i^{th}$ first fusion layer corresponds to an $i^{th}$ weight acquisition layer and the $i^{th}$ first parameter acquisition layer respectively, where n is an integer greater than 1, and i is a positive integer not greater than n. The above process of acquiring the second fusion feature based on the weight acquisition sub-model and the click prediction sub-model includes the following steps 1-4.

In step 1, based on the $i^{th}$ weight acquisition layer, feature conversion is performed on the recommendation parameter feature to acquire the $i^{th}$ weight feature.

In the embodiment of the present disclosure, the input of each weight acquisition layer is the same, and is the recommendation parameter feature, and the weight features output by different weight acquisition layers are different. In some embodiments, the weight features output by different weight acquisition layers have different feature sizes. For example, from the first weight feature to the $n^{th}$ weight feature, the feature size of the weight feature gradually decreases.

In some embodiments, the $i^{th}$ weight feature meets the following relationship:

$$P_i = \tanh\left(Embedding\left(context\right)W_i\right)$$

$P_i$ represents the $i^{th}$ weight feature, tanh ($\cdot$) represents a hyperbolic tangent function, *Embedding (context)* represents the recommendation parameter feature, and $W_i$ represents a transformation matrix of the $i^{th}$ weight acquisition layer.

In step 2, based on a first first parameter acquisition layer, dimension reduction processing is performed on the first fusion feature to acquire a first first dimension reduction feature.

In the embodiment of the present disclosure, for the first first parameter acquisition layer in the click prediction sub-model, its input is the first fusion feature, and a feature size of the first first dimension reduction feature is less than the feature size of the first fusion feature. For example, the first parameter acquisition layer is a convolution layer, and by performing convolution processing on the first fusion feature, a small-sized feature is acquired, that is, the first first dimension reduction feature is acquired.

In step 3, based on the first first fusion layer, the first dimension reduction feature and the first weight feature are fused to acquire a first third fusion feature.

In some embodiments, the feature size of the third fusion feature output by the first first fusion layer, the feature size of the first dimension reduction feature, and the feature size of the first weight feature are the same. Then, step 3 includes: determining, based on the first first fusion layer, a product of the first dimension reduction feature and the first weight feature as the first third fusion feature.

For example, the first dimension reduction feature includes multiple eigenvalues, and the first weight feature also includes multiple eigenvalues. Based on the first first fusion layer, the products of the eigenvalues in the first dimension reduction feature and the first weight feature at the same positions are determined, and the acquired multiple products are formed into the first third fusion feature.

In step 4, for a $j^{th}$ first parameter acquisition layer and a $j^{th}$ first fusion layer, based on the $j^{th}$ first parameter acquisition layer, dimension reduction processing is performed on a $(j-1)^{th}$ third fusion feature to acquire the $j^{th}$ first dimension reduction feature; based on the $j^{th}$ first fusion layer, the $j^{th}$ first dimension reduction feature and the $j^{th}$ weight feature are fused to acquire the $j^{th}$ third fusion feature; and the above steps are repeated until the second fusion feature is acquired based on the $n^{th}$ first fusion layer, where j is an integer greater than 1 and not greater than n.

In the embodiment of the present disclosure, the input of the $j^{th}$ first parameter acquisition layer is the $(j-1)^{tn}$ third fusion feature, and the $(j-1)^{th}$ third fusion feature is output by the $(j-1)^{th}$ first fusion layer. Each first parameter acquisition layer performs dimension reduction processing on the input feature to acquire one first dimension reduction feature, which is the same as the above steps 2 and 3 in principle, processing is performed based on the $j^{tn}$ first parameter acquisition layer and the $j^{th}$ first fusion layer to acquire the $j^{th}$ third fusion feature, and the above steps are repeated to acquire the second fusion feature input by the $n^{th}$ fusion layer.

In the embodiment of the disclosure, the weight acquisition sub-model includes the plurality of weight acquisition layers, different weight acquisition layers are configured to acquire weights of the features representing different dimensions, and the click prediction sub-model includes the same number of first parameter acquisition layers and first fusion layers. Based on the first parameter acquisition layers and first fusion layers included in the click prediction sub-model, multiple weight features are fused with the first fusion feature to enhance the features of the first fusion feature in respective dimensions, so that the acquired second fusion feature matches characteristics of the application server, thereby ensuring the accuracy of the second fusion feature.

**In step 305, the central server calls the click prediction sub-model in the recommendation model to fuse the second fusion feature and the recommendation parameter feature to acquire a first parameter.**

In the embodiment of the present disclosure, the weight feature is acquired by the recommendation parameter feature of the application server, and the weight feature is equivalent to a weight corresponding to the application server. Firstly, the first fusion feature and the weight feature are fused, and a second fusion feature acquired by the fusion is then fused with the recommendation parameter feature, so that the features of the application server are integrated into the first parameter, to ensure that the acquired first parameter matches the application server. Therefore, the accuracy of the first parameter is ensured, so as to achieve the effect of customized recommendation for the target account in the application server subsequently.

In some embodiments, the click prediction sub-model includes a parameter output layer, and step 305 includes: fusing the second fusion feature and the recommendation parameter feature to acquire the first parameter based on the parameter output layer.

In some embodiments, step 305 includes: the central server calls the click prediction sub-model to join the second fusion feature and the recommendation parameter feature to acquire a joined feature, and performs feature conversion on the joined feature to acquire the first parameter.

The second fusion feature is usually joined with the recommendation parameter feature, and the joined feature after the joining is subjected to feature conversion to enrich the features included in the joined feature, so as to capture correlation between the second fusion feature and the recommendation parameter feature corresponding to the application server and to ensure the accuracy of the first parameter.

In some embodiments, the second fusion feature, the recommendation parameter feature and the first parameter meet the following relationship:

$$y = w^T \cdot Concatenate\left[x, Embedding\left(context\right)\right] + b$$

$y$ represents the first parameter, $w$ represents a transformation matrix in the click prediction sub-model, $T$ represents transpose of the matrix, $Concatenate\left[\cdot\right]$ represents the joining of the features; $x$ represents the second fusion feature, $Embedding\left(context\right)$ represents the recommendation parameter feature, and $b$ represents a transformation parameter in the click prediction sub-model.

It should be noted that, in the embodiment of the present disclosure, the first fusion feature and the weight feature are firstly fused, and then the second fusion feature and the recommendation parameter feature are fused to acquire the first parameter, while in another embodiment, the first parameter of the multimedia resource can be acquired by calling the click prediction sub-model and based on the recommendation parameter feature and the first fusion feature in other ways without the need of executing steps 304-305.

In step 306, the central server calls a conversion prediction sub-model to fuse the first fusion feature and the weight feature to acquire a fourth fusion feature.

The conversion prediction sub-model is configured to acquire a second parameter which indicates a possibility that the terminal corresponding to the target account executes the click operation on the multimedia resource and then executes the conversion operation in a case that the multimedia resource is recommended to the target account. In the embodiment of the present disclosure, the second parameter also indicates a possibility that the terminal corresponding to the target account executes the click operation on the multimedia resource and then executes the conversion operation in a case that the application server recommends the multimedia resource to the target account. For example, the second parameter is the click-through conversion rate, and the conversion prediction model is configured to acquire the click-through conversion rate, that is, to predict a possibility that the terminal corresponding to the target account executes the click operation on the multimedia resource and then executes the conversion operation, in a case that the multimedia resource is recommended to the target account. For example, the conversion operation is a registration operation, an ordering operation, and the like. For example, after executing the click operation on the multimedia resource, the terminal corresponding to the target account executes the registration operation, the ordering operation, or an activation operation, etc., on the multimedia resource. For example, the second parameter is a prediction click-through conversion rate (PCVR).

In some embodiments, the weight acquisition sub-model includes n weight acquisition layers, the conversion prediction sub-model includes n second parameter acquisition layers and n second fusion layers, and an $i^{th}$ second fusion layer corresponds to an $i^{th}$ weight acquisition layer and an $i^{th}$ second parameter acquisition layer respectively, where n is an integer greater than 1, and i is a positive integer not greater than n. The above process of acquiring the fourth fusion feature based on the weight acquisition sub-model and the conversion prediction sub-model includes the following steps 5-8.

In step 5, based on the $i^{th}$ weight acquisition layer, feature conversion is performed on the recommendation parameter feature to acquire the $i^{th}$ weight feature.

In step 6, based on the first second parameter acquisition layer, dimension reduction processing is performed on the first fusion feature to acquire a first second dimension reduction feature.

In step 7, based on the first second fusion layer, the first dimension reduction feature and the first weight feature are fused to acquire a first fifth fusion feature.

In step 8, for a $j^{th}$ second parameter acquisition layer and a $j^{th}$ second fusion layer, a $(j-1)^{th}$ fifth fusion feature is subjected to dimension reduction processing to acquire a $j^{th}$ second dimension reduction feature based on the $j^{th}$ second parameter acquisition layer, the $j^{th}$ second dimension reduction feature and the $j^{th}$ weight feature are fused to acquire the $j^{th}$ fifth fusion feature based on the $j^{th}$ second fusion layer, and the above steps are repeated until the fourth fusion feature is acquired based on the $n^{th}$ second fusion layer, where j is an integer greater than 1 and not greater than n.

It should be noted that the above steps 5-8 are the same as the above steps 1-4 in principle, and will not be repeated here.

In the embodiment of the disclosure, the weight acquisition sub-model includes the plurality of weight acquisition layers, different weight acquisition layers are configured to acquire weights corresponding to the features representing different dimensions, and the conversion prediction sub-model includes the same number of second parameter acquisition layers and second fusion layers. Based on the second parameter acquisition layers and second fusion layers included in the conversion prediction sub-model, multiple weight features are fused with the first fusion feature to enhance the features of the first fusion feature in respective dimensions, so that the acquired four fusion feature matches characteristics of the application server, thereby ensuring the accuracy of the fourth fusion feature.

**In step 307, the central server calls the conversion prediction sub-model to fuse the fourth fusion feature and the recommendation parameter feature to acquire a second parameter.**

In the embodiment of the present disclosure, the weight feature is acquired through the recommendation parameter feature of the application server. Firstly, the first fusion feature and the weight feature are fused, and the fourth weight feature acquired by the fusion is then fused with the recommendation parameter feature, so that the features of the application server are integrated into the first parameter, to ensure that the acquired second parameter matches the application server. Therefore, the accuracy of the second parameter is ensured, so as to achieve the effect of customized recommendation for the target account in the application server subsequently.

In some embodiments, the conversion prediction sub-model includes a parameter output layer, and step 305 includes: fusing the fourth fusion feature and the recommendation parameter feature to acquire the second parameter based on the parameter output layer.

In some embodiments, step 307 includes: the central server calls the conversion prediction sub-model to join the fourth fusion feature and the recommendation parameter feature to acquire a joined feature, and performs feature conversion on the joined feature to acquire the second parameter.

It should be noted that, in the embodiment of the present disclosure, the first fusion feature and the weight feature are firstly fused, and then the fourth fusion feature and the recommendation parameter feature are fused to acquire the second parameter, while in another embodiment, the second parameter of the multimedia resource can be acquired by calling the conversion prediction sub-model and based on the recommendation parameter feature and the first fusion feature in other ways without the need of executing steps 306-307.

**In step 308, the central server calls a fusion sub-model in the recommendation model to fuse the first parameter and the second parameter to acquire a target parameter of the multimedia resource.**

The target parameter indicates a possibility that the terminal corresponding to the target account executes the operation on the multimedia resource in a case that the corresponding multimedia resource is recommended to the target account represented by the account information. In the embodiment of the present disclosure, the target parameter also indicates a possibility that the terminal corresponding to the target account executes the operation on the multimedia resource in a case that the application server recommends the corresponding multimedia resource to the target account. For example, the target parameter is the exposure conversion rate. For example, the target parameter is a prediction click-through conversion rate (PCTCVR).

The first parameter indicates a possibility that the terminal corresponding to the target account executes the click operation on the multimedia resource in a case that the application server recommends the multimedia resource to the target account, and the second parameter indicates a possibility that the terminal corresponding to the target account executes the click operation on the multimedia resource and then executes the conversion operation in a case that the application server recommends the multimedia resource to the target account. Therefore, by fusing the first parameter and the second parameter, it can acquire a possibility that the terminal corresponding to the target account executes the conversion operation on the multimedia resource in a case that the application server recommends the corresponding multimedia resource to the target account. Since situations of recommending the multimedia resource indicated by the first parameter and the second parameter are different, different information can be represented. The first parameter and the second parameter are acquired firstly in the manner of multitasking to enrich the acquired information, and then the first parameter and the second parameter are fused to acquire the target parameter, which realizes the acquisition of the target parameter with multiple parameters, thereby improving the accuracy of the target parameter.

In some embodiments, step 308 includes: calling the fusion sub-model to determine a product of the first parameter and the second parameter as the target parameter of the multimedia resource.

In the embodiment of the present disclosure, only the acquisition of the target parameter of one multimedia resource is taken as an example. According to the above steps 302-308, the target parameter of each multimedia resource to be recommended can be acquired.

It should be noted that the embodiment of the present disclosure takes the recommendation model including the feature extraction sub-model, the click prediction sub-model, the conversion prediction sub-model, the fusion sub-model and the weight acquisition sub-model as an example, and acquires the target parameter based on the multiple sub-models included in the recommendation model, and the target parameter indicates a possibility that the terminal corresponding to the target account executes the conversion operation on the multimedia resource in a case that the application server recommends the corresponding multimedia resource to the target account, while in another embodiment, the target parameter of each multimedia resource can be acquired based on the account information, the recommendation parameter and the resource information of the plurality of multimedia resources to be recommended in other ways without the need of executing steps 302-308, and the target parameter can also indicate a possibility that the terminal corresponding to the target account executes other operations on the multimedia resource, in a case that the application server recommends the corresponding multimedia resource to the target account.

**In step 309, the central server determines at least one multimedia resource with a largest target parameter in the plurality of multimedia resources as a selected target multimedia resource.**

In the plurality of multimedia resources, the target parameter of the target multimedia resource is greater than the target parameters of the remaining multimedia resources, and the remaining multimedia resources are multimedia resources other than the target multimedia resource in the plurality of multimedia resources. The target parameter can reflect the interest level of a user corresponding to the target account in the multimedia resource. Therefore, selecting at least one target multimedia resource with the largest target parameter from the plurality of multimedia resources means that the user corresponding to the target account is interested in the target multimedia resource.

In some embodiments, step 309 includes: selecting, by the central server, a target number of target multimedia resources with a largest target parameter from the plurality of multimedia resources. The target number is any number, for example, the target number is 3 or 5. For example, according to a descending order of the target parameters of the plurality of multimedia resources, a target number of top-ranked multimedia resources are selected from the plurality of multimedia resources as the target multimedia resources.

**In step 310, the central server sends the target multimedia resource to the application server, and the application server recommends the target multimedia resource to the target account.**

The central server sends the target multimedia resource to the application server, so that the application server sends the target multimedia resource to the target account.

In some embodiments, step 310 includes: sending, by the central server, the target multimedia resource to the application server, receiving, by the application server, the target multimedia resource, recommending the target multimedia resource to the terminal corresponding to the target account, and receiving, by the terminal, the target multimedia resource and displaying the target multimedia resource. The target multimedia resource is recommended to the terminal corresponding to the target account through the application server, and the terminal displays the target multimedia resource, so that the user can view the target multimedia resource.

In some embodiments, after step 310, the method further includes: acquiring, by the application server, a recommendation result of the target account, sending the recommendation result to the central server, receiving, by the central server, the recommendation result, and storing the recommendation result, the target account and an identifier of the application server correspondingly.

The recommendation result indicates an actual situation that the terminal corresponding to the target account executes the operation on the target multimedia resource, in a case that the application server recommends the target multimedia resource to the target account, that is, the recommendation result indicates whether the terminal corresponding to the target account executes the operation on the target multimedia resource, and which type of operation, such as the click operation or conversion operation, is executed if the operation is executed. Therefore, the recommendation result can reflect a recommendation effect of the multimedia resource. The central server receives the recommendation result and stores the recommendation result, the target account and the identifier of the application server correspondingly, so as to optimize the recommendation model based on the stored recommendation result subsequently.

It should be noted that the embodiment of the present disclosure is described by taking the case that the central server provides a recommendation service for multiple application servers as an example, while in another embodiment, the account represented by the account information is an account logging in to the central server, then there is no need to execute steps 301 and 310. The central server acquires the account information and the recommendation parameter of the central server, and determines, according to the above steps 302-309, the target multimedia resource of interest to the target account represented by the account information. Afterwards, the central server recommends the target multimedia resource to the target account.

The method according to the embodiment of the present disclosure provides a way of providing the recommendation service for multiple application servers, and introduces the recommendation parameter corresponding to the account information, and the recommendation parameter can embody a recommendation situation of a multimedia resource matching the account information. When the multimedia resource is recommended to an account logging in to any application server, the target parameter of each multimedia resource is determined based on the account information, the recommendation parameter of the application server and the resource information of the plurality of multimedia resources to be recommended, so that the target parameter matches the target account and the application server. The target parameter can represent an interest level of the target account in the multimedia resource, so that the target multimedia resource of interest to the target account in the plurality of multimedia resources is recommended to the target account, which realizes the solution of customized recommendation for the account in the application server, thereby ensuring the recommendation effect.

Furthermore, in the embodiment of the present disclosure, the target parameters of respective multimedia resources are acquired through the recommendation model to ensure the accuracy of the target parameters, and the subsequent recommendation of the multimedia resources is performed based on these target parameters, thereby ensuring the recommendation effect.

Besides, the target parameters are acquired in the manner of multitasking through the plurality of sub-models included in the recommendation model, that is, the first parameter and the second parameter are firstly acquired to enrich the acquired information, and then the first parameter and the second parameter are fused to acquire the target parameters, which realizes the acquisition of the target parameters with multiple parameters, thereby improving the accuracy of the target parameters.

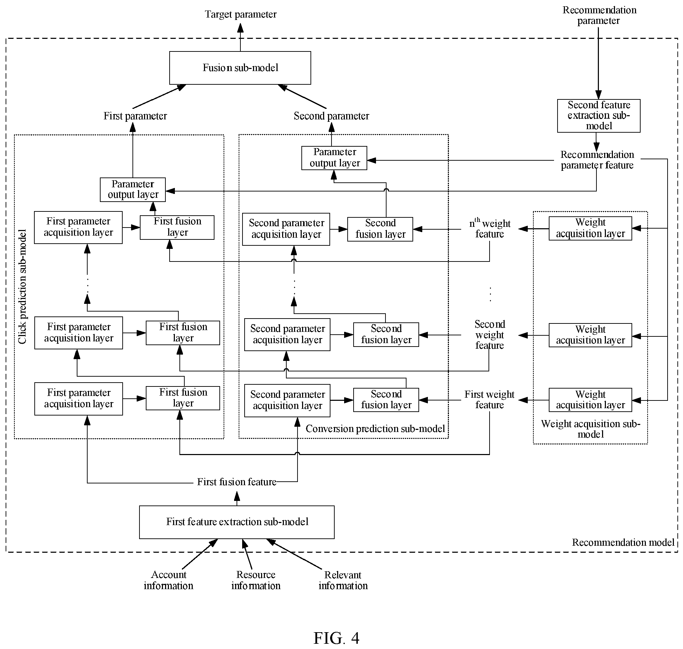

Based on the above embodiment shown in FIG. 3, according to a schematic structural diagram of a recommendation model shown in an exemplary embodiment, referring to FIG. 4, the recommendation model includes a first feature extraction sub-model, a second feature extraction sub-model, a click prediction sub-model, a conversion prediction sub-model, a weight acquisition sub-model and a fusion sub-model.

The first feature extraction sub-model is configured to perform feature extraction on account information, resource information of a multimedia resource and relevant information respectively, and fuse the extracted features to acquire a first fusion feature. The second feature extraction sub-model is configured to perform feature extraction on a recommendation parameter of an application server to acquire a recommendation parameter feature.

The click prediction sub-model includes n first parameter acquisition layers, n first fusion layers and a parameter output layer; the conversion prediction sub-model includes n second parameter acquisition layers, n second fusion layers and a parameter output layer; and the weight acquisition sub-model includes n weight acquisition layers, each of which is configured to acquire one weight feature.

For the click prediction sub-model, the input of the first first parameter acquisition layer is the first fusion feature, an output first first dimension reduction feature is input to the first first fusion layer, the first first fusion layer fuses the input first first dimension reduction feature and the first weight feature to acquire a first third fusion feature, and the first third fusion feature is input to a second first parameter acquisition layer. Afterwards, based on the remaining first parameter acquisition layers, the remaining first fusion layers, and the remaining weight features, the above way is followed until a second fusion feature is output by an $n^{th}$ first fusion layer. The second fusion feature and the recommendation parameter feature are fused to acquire a first parameter based on the parameter output layer.

For the conversion prediction sub-model, which is the same as the above click prediction sub-model in principle, after the $n^{th}$ second fusion layer outputs a fourth fusion feature, the fourth fusion feature and the recommendation parameter feature are fused to acquire a second parameter based on the parameter output layer in the click prediction sub-model.

The fusion sub-model is configured to fuse the first parameter output by the click prediction sub-model and the second parameter output by the conversion prediction sub-model to acquire a target parameter.

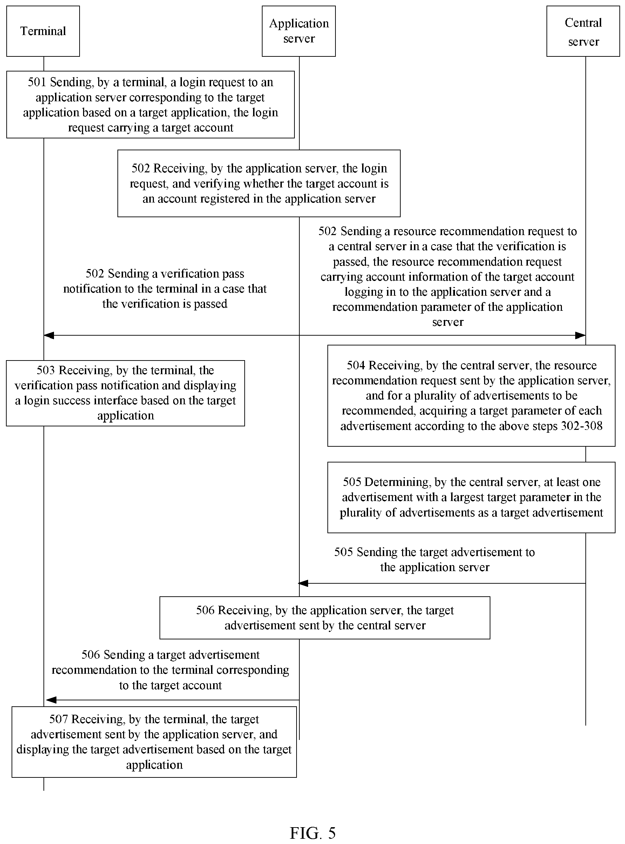

Based on the embodiment shown in FIG. 3 above, according to a flowchart of advertisement recommendation shown in an exemplary embodiment, referring to FIG. 5, the flow includes the following steps.

In step 501, a terminal sends a login request to an application server corresponding to the target application based on a target application, and the login request carries a target account.

The application server provides a service for the target application.

In step 502, the application server receives this login request, verifies whether the target account is an account registered in the application server, sends a resource recommendation request, which carries account information of the target account logging in to the application server and a recommendation parameter of the application server, to a central server in a case that the verification is passed, and sends a verification pass notification to the terminal.

In the embodiment of the present disclosure, the central server stores a plurality of advertisements to be recommended, the central server can provide an advertisement recommendation service for a plurality of application servers, each application server provides the service for one application. The advertisements can be displayed in the application and different application servers correspond to different applications. For example, in the applications corresponding to the plurality of application servers, one is a navigation application, another is a weather application, and yet another is a video sharing application.

In step 503, the terminal receives the verification pass notification, and displays a login success interface based on the target application.

In step 504, the central server receives the resource recommendation request sent by the application server, and for the plurality of advertisements to be recommended, acquires a target parameter of each advertisement according to the above steps 302-308.

In step 505, the central server determines at least one advertisement with a largest target parameter in the plurality of advertisements as a target advertisement, and sends the target advertisement to the application server.

In step 506, the application server receives the target advertisement sent by the central server, and sends a recommendation of the target advertisement to the terminal corresponding to the target account.

In step 507, the terminal receives the target advertisement sent by the application server, and displays the target advertisement based on the target application.

Compared with recommendation models in the related art, the recommendation model according to the present disclosure has a better recommendation effect, can recommend advertisements of interest to the account, and realizes precise recommendation of the advertisements. Besides, the number of the recommended advertisements can be reduced, advertisement positions for placing the advertisements are saved and thus more advertisements can be placed.

The method according to the embodiment of the present disclosure can be applied in the scenario of a server alliance, where the central server provides the recommendation service for the application servers corresponding to multiple applications, and based on the central server, the advertisements can be placed in the applications corresponding to different application servers. Due to different recommendation parameters of different application servers, when the advertisements are recommended to the accounts logging in to different application servers, the recommended advertisements in different application servers may be different, which can avoid the problem of a poor advertisement recommendation effect due to uneven quality of an advertisement traffic in the plurality of application servers, thereby achieving the customized recommendation for each application server.

On the basis of the embodiment shown in FIG. 3 above, before the target parameter is acquired based on the recommendation model, the recommendation model also needs to be trained, the recommendation model including a feature extraction sub-model, a click prediction sub-model, a conversion prediction sub-model and a fusion sub-model is taken as an example, and the training process is detailed in the following embodiment.

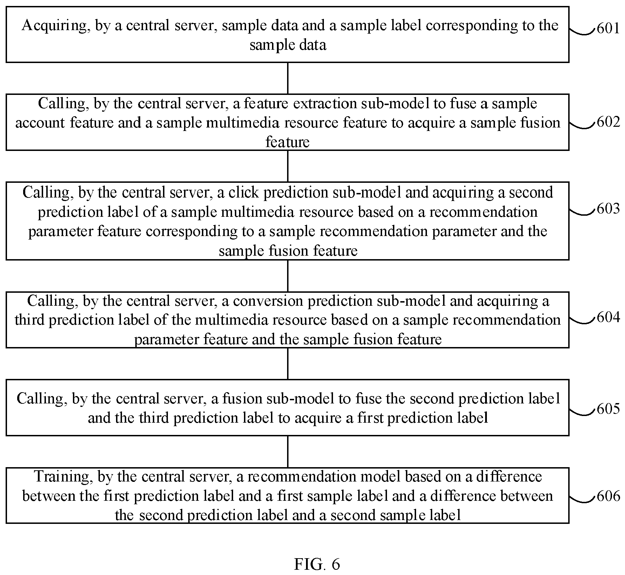

FIG. 6 is a flowchart of a method for training a recommendation model according to an exemplary embodiment. Referring to FIG. 6, the method includes the following steps.

**In step 601, a central server acquires sample data and a sample label corresponding to the sample data.**

The sample data includes sample account information, sample resource information of a sample multimedia resource, and a sample recommendation parameter corresponding to the sample account information, and the sample resource information is information describing the sample multimedia resource. The sample label indicates whether a terminal corresponding to a sample account executes an operation on the sample multimedia resource in a case that the sample multimedia resource is recommended to the sample account. In the embodiment of the present disclosure, the sample account information refers to the sample account logging in to an application server, a recommendation parameter of the application server is taken as a sample recommendation parameter corresponding to the sample account information, and the sample recommendation parameter is determined based on the operation executed by at least one account logging in to the application server on the multimedia resource recommended by the application server.

In the embodiment of the present disclosure, the sample label includes a first sample label and a second sample label. The first sample label indicates whether the terminal corresponding to the sample account executes a conversion operation on the sample multimedia resource in a case that the sample multimedia resource is recommended to the sample account, and the second sample label indicates whether the terminal corresponding to the sample account executes a click operation on the sample multimedia resource in a case that the sample multimedia resource is recommended to the sample account. That is, the first sample label indicates whether the terminal corresponding to the sample account executes the conversion operation on the sample multimedia resource in a case that the application server recommends the sample multimedia resource to the sample account, and the second sample label indicates whether the terminal corresponding to the sample account executes the click operation on the sample multimedia resource in a case that the application server recommends the sample multimedia resource to the sample account.

In some embodiments, step 601 includes: acquiring, by the central server, a plurality of pieces of sample data and a sample label corresponding to each piece of sample data.

The application servers corresponding to the plurality of pieces of sample data may be different. For example, the application servers corresponding to the plurality of pieces of sample data include an application server 1 and an application server 2, the recommendation model is subsequently trained based on the plurality of pieces of sample data, and the recommendation model can be called subsequently to provide a resource recommendation service for the application server 1 and the application server 2.

**In step 602, the central server calls a feature extraction sub-model to fuse a sample account feature and a sample multimedia resource feature to acquire a sample fusion feature.**

The sample account feature is a feature of the sample account information, and the sample multimedia resource feature is a feature corresponding to the sample resource information.

This step is the same as the above step 302 in principle, and will not be repeated here.

**In step 603, the central server calls a click prediction sub-model and acquires a second prediction label of the sample multimedia resource based on a recommendation parameter feature corresponding to the sample recommendation parameter and the sample fusion feature.**

The second prediction label indicates a possibility that the terminal corresponding to the sample account executes the click operation on the sample multimedia resource in a case that the sample multimedia resource is recommended to the sample account. In the embodiment of the present disclosure, the second prediction label also indicates a possibility that the terminal corresponding to the sample account executes the click operation on the sample multimedia resource in a case that the application server recommends the sample multimedia resource to the sample account. For example, the second prediction label is a prediction exposure click-through rate. This step is the same as the above steps 305-305 in principle, and will not be repeated here.

**In step 604, the central server calls a conversion prediction sub-model and acquires a third prediction label of the multimedia resource based on the sample recommendation parameter feature and the sample fusion feature.**

The third prediction label indicates a possibility that the terminal corresponding to the sample account executes the click operation on the sample multimedia resource and then executes the conversion operation in a case that the sample multimedia resource is recommended to the sample account. In the embodiment of the present disclosure, the third prediction label also indicates a possibility that the terminal corresponding to the sample account executes the click operation on the sample multimedia resource and then executes the conversion operation in a case that the application server recommends the sample multimedia resource to the sample account. For example, the third prediction label is a prediction click-through conversion rate. This step is the same as the above steps 306-307 in principle, and will not be repeated here.

**In step 605, the central server calls a fusion sub-model to fuse the second prediction label and the third prediction label to acquire a first prediction label.**

The first prediction label indicates a possibility that the terminal corresponding to the sample account executes the conversion operation on the sample multimedia resource in a case that the sample multimedia resource is recommended to the sample account. In the embodiment of the present disclosure, the first prediction label indicates a possibility that the terminal corresponding to the sample account executes the conversion operation on the sample multimedia resource in a case that the application server recommends the sample multimedia resource to the sample account. For example, the first prediction label is a prediction exposure conversion rate. This step is the same as the above step 308 in principle, and will not be repeated here.

It should be noted that the embodiment of the present disclosure is described by taking the prediction label including the first prediction label and the second prediction label as an example, while in another embodiment, the prediction label of the sample multimedia resource in the sample data may be acquired by calling the recommendation model and based on the sample data in other ways without the need of executing steps 602-605, and the prediction label indicates a possibility that the terminal corresponding to the sample account executes the operation on the sample multimedia resource in a case that the sample multimedia resource is recommended to the sample account.

**In step 606, the central server trains the recommendation model based on a difference between the first prediction label and a first sample label, and a difference between the second prediction label and a second sample label.**

In the embodiment of the present disclosure, the sample label corresponding to the sample data also includes the second sample label, and the second sample label indicates whether the terminal corresponding to the sample account executes the click operation on the sample multimedia resource in a case that the application server recommends the sample multimedia resource to the sample account.

The first prediction label indicates a possibility that the terminal corresponding to the sample account executes the conversion operation on the sample multimedia resource in a case that the application server recommends the sample multimedia resource to the sample account, and the first sample label indicates whether the terminal corresponding to the sample account executes the conversion operation on the sample multimedia resource in a case that the application server recommends the sample multimedia resource to the sample account. Therefore, the difference between the first prediction label and the first sample label can reflect an accurate rate of the recommendation model. In addition, the second prediction label indicates a possibility that the terminal corresponding to the sample account executes the click operation on the sample multimedia resource in a case that the application server recommends the sample multimedia resource to the sample account, and the second sample label indicates whether the terminal corresponding to the sample account executes the click operation on the sample multimedia resource in a case that the application server recommends the sample multimedia resource to the sample account. Therefore, the difference between the second prediction label and the second sample label can also reflect the accurate rate of the recommendation model. Based on these two differences, the recommendation model is adjusted to improve the accuracy of the recommendation model.

In some embodiments, step 606 includes: determining a first loss value based on the difference between the first prediction label and the first sample label, determining a second loss value based on the difference between the second prediction label and the second sample label, and training the recommendation model based on a sum of the first loss value and the second loss value.

For example, the first prediction label is the prediction exposure conversation rate, the first sample label is an exposure conversion rate, the second prediction label is the prediction exposure click-through rate, and the second sample label is an exposure click-through rate. The exposure conversion rate is 0 or 1, in which 0 represents that the sample account executes no conversion operation on the sample multimedia resource and 1 represents that the sample account executes the conversion operation on the sample multimedia resource. The exposure click-through rate is 0 or 1, in which 0 represents that the sample account executes no click operation on the sample multimedia resource and 1 indicates that the sample account executes the click operation on the sample multimedia resource. The first loss value can be calculated based on the prediction exposure conversion rate and the exposure conversion rate, and the second loss value can be determined based on the prediction exposure click-through rate and the exposure click-through rate.

It should be noted that the embodiment of the present disclosure is described by taking one piece of sample data as an example, while in another embodiment, a plurality of pieces of sample data and the sample label corresponding to each piece of sample data are acquired, and according to the above steps 601-606, the recommendation model is trained for several iterations.

It should be noted that the embodiment of the present disclosure takes the sample label including the first sample label and the second sample label as an example, and trains the recommendation model based on the difference between the first prediction label and the first sample label and the difference between the second prediction label and the second sample label. While in another embodiment, the recommendation model can be trained in other ways based on the differences between the prediction labels and the sample labels without the need of executing step 606.

In the method according to the embodiment of the present disclosure, the sample data includes the sample account information, the sample resource information of the sample multimedia resource and the sample recommendation parameter of the application server, and the recommendation model is trained based on the sample data and the corresponding sample label to improve the accuracy of the recommendation model, so that the recommendation model can be called subsequently and a customized recommendation can be achieved for the application server based on the recommendation parameter of the application server.

Besides, in the process of training the recommendation model, the plurality of pieces of sample data and the sample label corresponding to each piece of sample data are acquired, and the plurality of pieces of sample data correspond to a plurality of application servers. That is, the recommendation model trained based on the plurality of pieces of sample data can provide a recommendation service for the plurality of application servers, and the multimedia resources are subsequently recommended to the accounts logging in to the plurality of application servers based on the recommendation model, thereby avoiding the problem of a poor recommendation effect caused by different recommendation situations of multimedia resources in the plurality of application servers and also achieving the customized recommendation for the plurality of application servers.

Furthermore, the second prediction label and the third prediction label can represent different information, the second prediction label and the third prediction label are firstly acquired in the manner of multitasking to enrich the acquired information, and then the second prediction label and the third prediction label are fused to acquire the first prediction label so as to ensure the accuracy of the acquired first prediction label.

In addition, in the embodiment of the present disclosure, the recommendation model is trained in the manner of multitasking, that is, acquiring the first prediction label, the second prediction label and the third prediction label. Training the recommendation model in the manner of multitasking can alleviate the problem of a poor accuracy of the recommendation model caused by sparse sample data and thus improve the accuracy of the recommendation model. In addition, the recommendation model is trained based on the sample data corresponding to the plurality of application servers, which enriches the sample data for training the recommendation model, improves the accuracy of the recommendation model, and alleviates the problem of a poor accuracy of the recommendation model caused by the sparse sample data.

It should be noted that the embodiment shown in FIG. 3 above takes the recommendation model as an example and acquires the target parameter of the multimedia resource based on the recommendation model. While in another embodiment, there is no need to call the recommendation model, the target parameter can be acquired by other ways, and the process of acquiring the target parameter is detailed in the following embodiment.

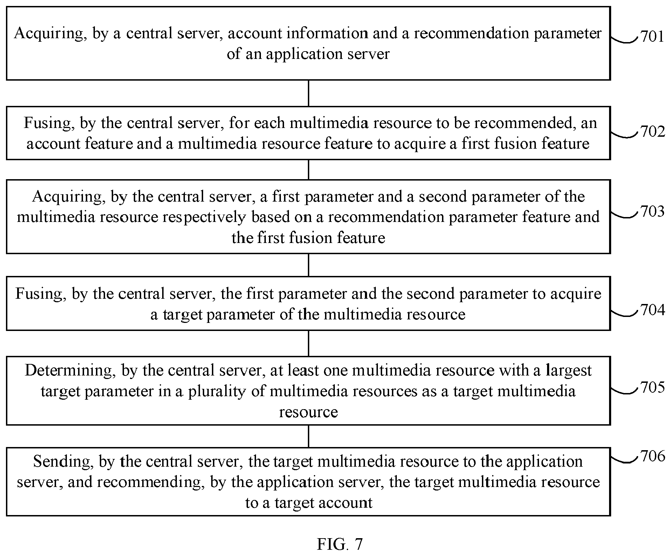

FIG. 7 is a flowchart of a method for recommending a multimedia resource according to an exemplary embodiment. Referring to FIG. 7, the method is executed by a central server and includes the following steps.

**In step 701, a central server acquires account information and a recommendation parameter of an application server**.

The account information refers to a target account of a resource to be recommended, the target account is an account logging into the application server, and the recommendation parameter is determined based on the operation performed by at least one account logging in to the application server on the multimedia resource recommended by the application server.

This step is the same as the above step 301 in principle, and will not be repeated here.

**In step 702, for each multimedia resource to be recommended, the central server fuses an account feature and a multimedia resource feature to acquire a first fusion feature.**

The account feature is a feature of the account information, and the multimedia resource feature is a feature corresponding to resource information of the multimedia resource.

In some embodiments, the first fusion feature is acquired by fusing the account feature, the multimedia resource feature and a relevant feature, that is, the process of acquiring the first fusion feature includes: acquiring the relevant feature based on the account information and the resource information of the multimedia resource, where the relevant feature indicates an interaction between a terminal corresponding to the target account and the multimedia resource, and also indicates an interaction between the terminal corresponding to the target account and other multimedia resources which are recommended by the terminal other than the multimedia resource; and fusing the account feature, the multimedia resource feature and the relevant feature to acquire the first fusion feature.

This step is the same as the above step 302 in principle, and will not be repeated here.

In step 703, the central server acquires a first parameter and a second parameter of the multimedia resource respectively based on a recommendation parameter feature and the first fusion feature.

The recommendation parameter feature is a feature of the recommendation parameter, the first parameter indicates a possibility that the terminal corresponding to the target account executes a click operation on the multimedia resource in a case that the application server recommends the multimedia resource to the target account, and the second parameter indicates a possibility that the terminal corresponding to the target account executes the click operation on the multimedia resource and then executes a conversion operation in a case that the application server recommends the multimedia resource to the target account.

In some embodiments, this step 703 includes: performing feature conversion on the recommendation parameter feature to acquire a weight feature of the first fusion feature; and acquiring the first parameter and the second parameter based on the recommendation parameter feature, the first fusion feature and the weight feature, respectively.

This step is the same as the above steps 303-307 in principle, and will not be repeated here.

In step 704, the central server fuses the first parameter and the second parameter to acquire a target parameter of the multimedia resource.

This step is the same as the above step 308 in principle, and will not be repeated here.

The embodiment of the present disclosure is only described by taking the acquisition of the target parameter of one multimedia resource as an example, and according to the above steps 702-704, the target parameter of each multimedia resource to be recommended can be acquired.

It should be noted that the embodiment of the present disclosure acquires the target parameter based on the account feature, the recommendation feature of the recommendation parameter and the multimedia resource feature of the multimedia resource. While in another embodiment, the target parameter of each multimedia resource can be acquired in other ways based on the account information, the recommendation parameter and the resource information of the plurality of multimedia resources to be recommended without the need of executing steps 702-704.

In step 705, the central server determines at least one multimedia resource with a largest target parameter in the plurality of multimedia resources as a target multimedia resource.

In step 706, the central server sends the target multimedia resource to the application server, and the application server recommends the target multimedia resource to the target account.

The steps 705-706 are the same as the above steps 309-310 in principle, and will not be repeated here.

The method according to the embodiment of the present disclosure provides a way of providing the recommendation service for multiple application servers, and introduces the recommendation parameter corresponding to the account information, and the recommendation parameter can embody a recommendation situation of a multimedia resource matching the account information. When the multimedia resource is recommended to an account logging in to any application server, the target parameter of each multimedia resource is determined based on the account information, the recommendation parameter of the application server and the resource information of the plurality of multimedia resources to be recommended, so that the target parameter matches the target account and the application server. The target parameter can represent an interest level of the target account in the multimedia resource, so that the target multimedia resource of interest to the target account in the plurality of multimedia resources is recommended to the target account, which realizes the solution of customized recommendation for the account, thereby ensuring the recommendation effect.

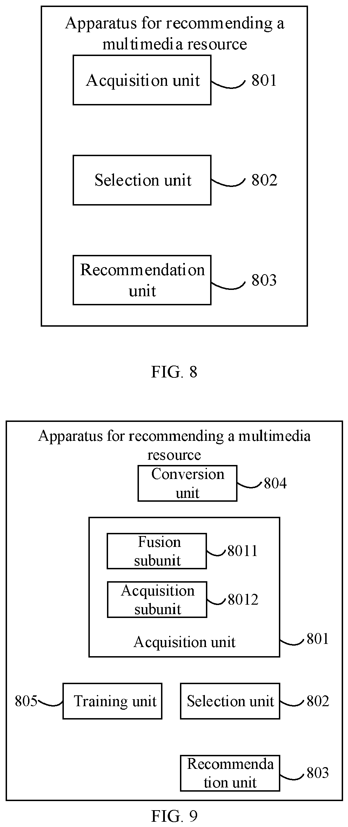

FIG. 8 is a block diagram of an apparatus for recommending a multimedia resource according to an exemplary embodiment. Referring to FIG. 8, the apparatus includes:

an acquisition unit 801, configured to acquire account information and a recommendation parameter corresponding to the account information;

the acquisition unit 801 is further configured to acquire a target parameter of each multimedia resource based on the account information, the recommendation parameter and resource information of a plurality of multimedia resources to be recommended, in which the target parameter indicates a possibility that a terminal corresponding to the target account executes an operation on the multimedia resource in a case that the corresponding multimedia resource is recommended to the target account, and the target account is an account represented by the account information;

a selection unit 802, configured to determine at least one multimedia resource with a largest target parameter in the plurality of multimedia resources as a target multimedia resource; and
a recommendation unit 803, configured to recommend the target multimedia resource to the target account.

In some embodiments, as shown in FIG. 9, the acquisition unit 801 includes:

a fusion subunit 8011, configured to fuse an account feature and a multimedia resource feature to acquire a first fusion feature, for each multimedia resource to be recommended, where the account feature is a feature of the account information, and the multimedia resource feature is a feature corresponding to the resource information of the multimedia resource; and
an acquisition subunit 8012, configured to acquire a first parameter and a second parameter of the multimedia resource respectively based on a recommendation parameter feature and the first fusion feature, where the recommendation parameter feature is a feature of the recommendation parameter, the first parameter indicates a possibility that the terminal corresponding to the target account executes a click operation on the multimedia resource in a case that the multimedia resource is recommended to the target account, and the second parameter indicates a possibility that the terminal corresponding to the target account executes the click operation on the multimedia resource and then executes a conversion operation in a case that the multimedia resource is recommended to the target account.

The fusion subunit 8011 is further configured to fuse the first parameter and the second parameter to acquire the target parameter of the multimedia resource.

In some embodiments, the acquisition subunit 8012 is configured to perform feature conversion on the recommendation parameter feature to acquire a weight feature of the first fusion feature; and acquire the first parameter and the second parameter respectively based on the recommendation parameter feature, the first fusion feature and the weight feature.

In some embodiments, the acquisition unit 801 is further configured to acquire a relevant feature based on the account information and the resource information of the multimedia resource, where the relevant feature indicates an interaction between the terminal corresponding to the target account and the multimedia resource, and also indicates an interaction between the terminal corresponding to the target account and other multimedia resources which are multimedia resources recommended by the terminal other than the multimedia resource.

The fusion subunit 8011 is configured to fuse the account feature, the multimedia resource feature and the relevant feature to acquire the first fusion feature.

In some embodiments, the acquisition unit 801 is configured to call a recommendation model, and acquire the target parameter of each multimedia resource based on the account information, the recommendation parameter and the resource information of the plurality of multimedia resources to be recommended.

In some embodiments, the recommendation model includes a feature extraction sub-model, a click prediction sub-model, a conversion prediction sub-model and a fusion sub-model; as shown in FIG. 9, the acquisition unit 801 includes:

the fusion subunit 8011, configured to call the feature extraction sub-model to fuse the account feature and the multimedia resource feature to acquire the first fusion feature, for each of the plurality of multimedia resources to be recommended, where the account feature is a feature of the account information, and the multimedia resource feature is a feature corresponding to the resource information of the multimedia resource; and
the acquisition subunit 8012, configured to call the click prediction sub-model and acquire the first parameter of the multimedia resource based on the recommendation parameter feature and the first fusion feature, where the recommendation parameter feature is a feature of the recommendation parameter, and the first parameter indicates a possibility that the terminal corresponding to the target account executes a click operation on the multimedia resource in a case that the multimedia resource is recommended to the target account.

The acquisition subunit 8012 is configured to call the conversion prediction sub-model, and acquire the second parameter of the multimedia resource based on the recommendation parameter feature and the first fusion feature, where the second parameter indicates a possibility that the terminal corresponding to the target account executes the click operation on the multimedia resource and then executes the conversion operation in a case that the multimedia resource is recommended to the target account.

The fusion subunit 8011 is further configured to call the fusion sub-model to fuse the first parameter and the second parameter to acquire the target parameter of the multimedia resource.

In some embodiments, the recommendation model also includes a weight acquisition sub-model, and as shown in FIG. 9, the apparatus further includes:

a conversion unit 804, configured to call the weight acquisition sub-model to perform feature conversion on the recommendation parameter feature to acquire the weight feature of the first fusion feature.

The acquisition subunit 8012 is configured to call the click prediction sub-model to fuse the first fusion feature and the weight feature to acquire a second fusion feature; and call the click prediction sub-model to fuse the second fusion feature and the recommendation parameter feature to acquire the first parameter.

In some embodiments, the weight acquisition sub-model includes n weight acquisition layers, the click prediction sub-model includes n first parameter acquisition layers and n first fusion layers, and the $i^{th}$ first fusion layer respectively corresponds to the $i^{th}$ weight acquisition layer and the $i^{th}$ first parameter acquisition layer, where n is an integer greater than 1, and i is a positive integer not greater than n; the conversion unit 804 is configured to perform feature conversion on the recommendation parameter feature to acquire the $i^{th}$ weight feature, based on the $i^{th}$ weight acquisition layer.

The acquisition subunit 8012 is configured to perform dimension reduction processing on the first fusion feature to acquire a first first dimension reduction feature, based on the first first parameter acquisition layer; fuse the first dimension reduction feature and the first weight feature to acquire a first third fusion feature, based on the first first fusion layer; and for the $j^{th}$ first parameter acquisition layer and the $j^{th}$ first fusion layer, perform dimension reduction processing on the $(j-1)^{th}$ third fusion feature to acquire the $j^{th}$ first dimension reduction feature based on the $j^{th}$ first parameter acquisition layer; fuse the $j^{th}$ first dimension reduction feature and the $j^{th}$ weight feature to acquire the $j^{th}$ third fusion feature based on the $j^{th}$ first fusion layer, and repeat the above steps until the second fusion feature is acquired based on the $n^{th}$ first fusion layer, where j is an integer greater than 1 and not greater than n.

In some embodiments, the recommendation model also includes the weight acquisition sub-model, and as shown in FIG. 9, the apparatus further includes:
the conversion unit 804, configured to call the weight acquisition sub-model to perform feature conversion on the recommendation parameter feature to acquire the weight feature of the first fusion feature.

The acquisition subunit 8012 is configured to call the conversion prediction sub-model to fuse the first fusion feature and the weight feature to acquire a fourth fusion feature; and call the conversion prediction sub-model to fuse the fourth fusion feature and the recommendation parameter feature to acquire the second parameter.

In some embodiments, the weight acquisition sub-model includes n weight acquisition layers, the conversion prediction sub-model includes n second parameter acquisition layers and n second fusion layers, and the $i^{th}$ second fusion layer respectively corresponds to the $i^{th}$ weight acquisition layer and the $i^{th}$ second parameter acquisition layer, where n is an integer greater than 1, and i is a positive integer not greater than n; the conversion unit 804 is configured to perform feature conversion on the recommendation parameter feature to acquire the $i^{th}$ weight feature, based on the $i^{th}$ weight acquisition layer.

The acquisition subunit 8012 is configured to perform dimension reduction processing on the first fusion feature to acquire a first second dimension reduction feature, based on the first second parameter acquisition layer; fuse the first dimension reduction feature and the first weight feature to acquire a first fifth fusion feature, based on the first second fusion layer; and for the $j^{th}$ second parameter acquisition layer and the $j^{th}$ second fusion layer, perform dimension reduction processing on the $(j-1)^{th}$ fifth fusion feature, to acquire the $j^{th}$ second dimension reduction feature, based on the $j^{th}$ second parameter acquisition layer; fuse the $j^{th}$ second dimension reduction feature and the $j^{th}$ weight feature to acquire the $j^{th}$ fifth fusion feature based on the $j^{th}$ second fusion layer, and repeat the above steps until the fourth fusion feature is acquired based on the $n^{th}$ second fusion layer, where j is an integer greater than 1 and not greater than n.

In some embodiments, the acquisition unit 801 is also configured to call the feature extraction sub-model, and acquire the relevant feature, based on the account information and the resource information of the multimedia resource, where the relevant feature indicates an interaction between the terminal corresponding to the target account and the multimedia resource, and also indicates an interaction between the terminal corresponding to the target account and other multimedia resources, and the other multimedia resources are multimedia resources recommended by the terminal other than the multimedia resource.

The fusion subunit 8011 is configured to call the feature extraction sub-model to fuse the account feature, the multimedia resource feature, and the relevant feature to acquire the first fusion feature.

In some embodiments, as shown in FIG. 9, the apparatus further includes:

the acquisition unit 801 also configured to acquire sample data and a sample label corresponding to the sample data, where the sample data includes sample account information, sample resource information of a sample multimedia resource, and a sample recommendation parameter corresponding to the sample account information, and the sample label indicates whether a terminal corresponding to the sample account executes an operation on the sample multimedia resource, in a case that the sample multimedia resource is recommended to a sample account;

the acquisition unit 801 being further configured to call the recommendation model, and acquire a prediction label of the sample multimedia resource based on the sample data, where the prediction label indicates a possibility that the terminal corresponding to the sample account executes the operation on the sample multimedia resource in a case that the sample multimedia resource is recommended to the sample account; and

a training unit 805 configured to train the recommendation model, based on a difference between the prediction label and the sample label.

In some embodiments, the sample label includes a first sample label indicating whether the terminal corresponding to the sample account executes a conversion operation on the sample multimedia resource in a case that the sample multimedia resource is recommended to the sample account, and the prediction label includes a first prediction label indicating a possibility that the terminal corresponding to the sample account executes the conversion operation on the sample multimedia resource in a case that the sample multimedia resource is recommended to the sample account; the recommendation model includes the feature extraction sub-model, the click prediction sub-model, the conversion prediction sub-model and the fusion sub-model; the acquisition unit 801 is configured to call the feature extraction sub-model to fuse a sample account feature and a sample multimedia resource feature to acquire a sample fusion feature, where the sample account feature is a feature of the sample account information, and the sample multimedia resource feature is a feature of the sample resource information; call the click prediction sub-model and acquire a second prediction label of the sample multimedia resource based on a recommendation parameter feature corresponding to the sample recommendation parameter and the sample fusion feature, where the second prediction label indicates a possibility that the terminal corresponding to the sample account executes a click operation on the sample multimedia resource in a case that the sample multimedia resource is recommended to the sample account; call the conversion prediction sub-model and acquire a third prediction label of the multimedia resource based on the sample recommendation parameter feature and the sample fusion feature, where the third prediction label indicates a possibility that the terminal corresponding to the sample account executes the click operation on the sample multimedia resource and then executes the conversion operation in a case that the sample multimedia resource is recommended to the sample account; and call the fusion sub-model to fuse the second prediction label and the third prediction label to acquire the first prediction label.

In some embodiments, the sample label further includes a second sample label indicating whether the terminal corresponding to the sample account executes the click operation on the sample multimedia resource in a case that the sample multimedia resource is recommended to the sample account; and the training unit 805 is configured to train the recommendation model, based on a difference between the first prediction label and the first sample label and a difference between the second prediction label and the second sample label.

In some embodiments, the recommendation parameter corresponding to the account information is determined based on an operation executed on the multimedia resource recommended by an application server by at least one account logging in to the application server, the application server being a server logged in by the target account.

The recommendation unit 803 is configured to send the target multimedia resource to the application server, and recommend, by the application server, the target multimedia resource to the target account.

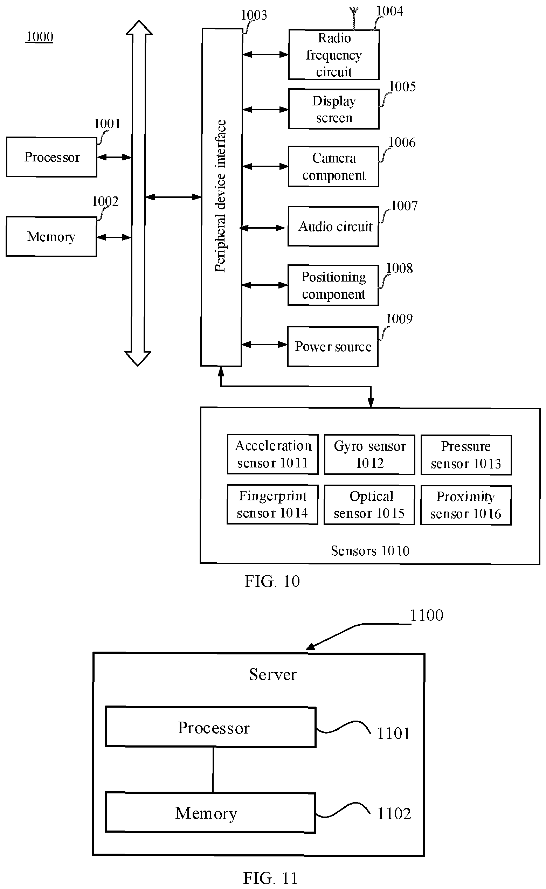

In some embodiments, the electronic device is provided as a terminal. FIG. 10 is a structural block diagram of a terminal 1000 according to an exemplary embodiment of the present disclosure. The terminal 1000 may be a portable mobile terminal, such as a smart mobile phone, a tablet computer, an MP3 (moving picture experts group audio layer III) player, an MP4 (moving picture experts group audio layer IV) player, a laptop or a desk computer. The terminal 1000 may also be called user equipment (UE), a portable terminal, a laptop terminal, a desk terminal, etc.

The terminal 1000 includes a processor 1001 and a memory 1002.

The processor 1001 may include one or more processing cores, such as a 4-core processor and an 8-core processor. The processor 1001 may be formed by at least one hardware of a digital signal processing (DSP), a field-programmable gate array (FPGA), and a programmable logic array (PLA). The processor 1001 may also include a main processor and a coprocessor. The main processor is a processor for processing the data in an awake state, and is also called a central processing unit (CPU). The coprocessor is a low-power-consumption processor for processing the data in a standby state. In some embodiments, the processor 1001 may be integrated with a graphics processing unit (GPU), which is configured to render and draw the content that needs to be displayed by a display screen. In some embodiments, the processor 1001 may also include an artificial intelligence (AI) processor configured to process computational operations related to machine learning.

The memory 1002 may include one or more computer-readable storage mediums, which can be non-transitory. The memory 1002 may also include a high-speed random-access memory, as well as a non-volatile memory, such as one or more disk storage devices and flash storage devices. In some embodiments, the non-transitory computer-readable storage medium in the memory 1002 is configured to store at least one program code. The at least one program code is configured to be executed by the processor 1001 to implement the methods for recommending a multimedia resource according to the method embodiments in the embodiments of the present disclosure.

In some embodiments, the terminal 1000 also optionally includes a peripheral device interface 1003 and at least one peripheral device. The processor 1001, the memory 1002, and the peripheral device interface 1003 may be connected by a bus or a signal line. Each peripheral device may be connected to the peripheral device interface 1003 by a bus, a signal line or a circuit board. Specifically, the peripheral device includes at least one of a radio frequency circuit 1004, a display screen 1005, a camera component 1006, an audio circuit 1007, a positioning component 1008 and a power source 1009.

The peripheral device interface 1003 may be configured to connect at least one peripheral device relevant parameter relevant to an input/output (I/O) to the processor 1001 and the memory 1002. In some embodiments, the processor 1001, the memory 1002 and the peripheral device interface 1003 are integrated on the same chip or circuit board. In some other embodiments, any one or two of the processor 1001, the memory 1002 and the peripheral device interface 1003 may be implemented on a separate chip or circuit board, which is not limited in the present embodiment.

The radio frequency circuit 1004 is configured to receive and transmit a radio frequency (RF) signal, which is also referred to as an electromagnetic signal. The radio frequency circuit 1004 communicates with a communication network and other communication devices via the electromagnetic signal. The radio frequency circuit 1004 converts the electrical signal into the electromagnetic signal for transmission, or converts the received electromagnetic signal into the electrical signal. Optionally, the radio frequency circuit 1004 includes an antenna system, an RF transceiver, one or more amplifiers, a tuner, an oscillator, a digital signal processor, a codec chipset, a subscriber identity module card, and the like. The radio frequency circuit 1004 can communicate with other terminals via at least one wireless communication protocol. The wireless communication protocol includes, but not limited to, the World Wide Web, a metropolitan area network, an intranet, various generations of mobile communication networks (2G, 3G, 4G, and 5G), a wireless local area network, and/or a wireless fidelity (WiFi) network. In some embodiments, the radio frequency circuit 1004 may also include near field communication (NFC) related circuits, which is not limited in the present disclosure.

The display screen 1005 is configured to display a user interface (UI). The UI may include graphics, text, icons, videos, and any combination thereof. When the display screen 1005 is a touch display screen, the display screen 1005 also has the capacity to acquire touch signals on or over the surface of the display screen 1005. The touch signal may be input into the processor 1001 as a control signal for processing. At this time, the display screen 1005 may also be configured to provide virtual buttons and/or virtual keyboards, which are also referred to as soft buttons and/or soft keyboards. In some embodiments, one display screen 1005 may be disposed on the front panel of the terminal 1000. In some other embodiments, at least two display screens 1005 may be disposed respectively on different surfaces of the terminal 1000 or in a folded design. In further embodiments, the display screen 1005 may be a flexible display screen disposed on the curved or folded surface of the terminal 1000. Even the display screen 1005 may have an irregular shape other than a rectangle; that is, the display screen 1005 may be an irregular-shaped screen. The display screen 1005 may be prepared from a liquid crystal display (LCD) screen, an organic light-emitting diode (OLED), and the like.

The camera component 1006 is configured to capture images or videos. Optionally, the camera component 1006 includes a front camera and a rear camera. Usually, the front camera is placed on the front panel of the terminal, and the rear camera is placed on the back of the terminal. In some embodiments, at least two rear cameras are disposed, and are any one of a main camera, a depth-of-field camera, a wide-angle camera, and a telephoto camera respectively, so as to realize a background blurring function achieved by fusion of the main camera and the depth-of-field camera, panoramic shooting and virtual reality (VR) shooting functions achieved by fusion of the main camera and the wide-angle camera or other fusion shooting functions. In some embodiments, the camera component 1006 may also include a flashlight. The flashlight may be a mono-color temperature flashlight or a two-color temperature flashlight. The two-color temperature flash is a combination of a warm flashlight and a cold flashlight and can be configured for light compensation at different color temperatures.

The audio circuit 1007 may include a microphone and a speaker. The microphone is configured to collect sound waves of users and environments, and convert the sound waves into electrical signals which are input into the processor 1001 for processing, or input into the radio frequency circuit 1004 for voice communication. For the purpose of stereo acquisition or noise reduction, there may be a plurality of microphones respectively disposed at different locations of the terminal 1000. The microphone may also be an array microphone or an omnidirectional acquisition microphone. The speaker is then configured to convert the electrical signals from the processor 1001 or the radio frequency circuit 1004 into the sound waves. The speaker may be a conventional film speaker or a piezoelectric ceramic speaker. When the speaker is the piezoelectric ceramic speaker, the electrical signal can be converted into not only human-audible sound waves but also the sound waves which are inaudible to humans for the purpose of ranging and the like. In some embodiments, the audio circuit 1007 may also include a headphone jack.

The positioning component 1008 is configured to locate the current geographic location of the terminal 1000 to implement navigation or location-based service (LBS). The positioning component 1008 may be a positioning component based on the American global positioning system (GPS), the Chinese Beidou system, the Russian GRONASS system or the Galileo system of the European Union.

The power source 1009 is configured to power up various components in the terminal 1000. The power source 1009 may be alternating current, direct current, a disposable battery, or a rechargeable battery. When the power source 1009 includes the rechargeable battery, the rechargeable battery may a wired rechargeable battery or a wireless rechargeable battery. The wired rechargeable battery is a battery charged by a cable line, and wireless rechargeable battery is charged by a wireless coil. The rechargeable battery may also support the fast charging technology.

In some embodiments, the terminal 1000 also includes one or more sensors 1010. The one or more sensors 1010 include, but not limited to, an acceleration sensor 1011, a gyro sensor 1012, a pressure sensor 1013, a fingerprint sensor 1014, an optical sensor 1015 and a proximity sensor 1016.

The acceleration sensor 1011 may detect magnitudes of accelerations on three coordinate axes of a coordinate system established by the terminal 1000. For example, the acceleration sensor 1011 may be configured to detect components of a gravitational acceleration on the three coordinate axes. The processor 1001 may control the display screen 1005 to display a user interface in a landscape view or a portrait view according to a gravity acceleration signal collected by the acceleration sensor 1011. The acceleration sensor 1011 may also be configured to collect motion data of a game or a user.

The gyro sensor 1012 can detect a body direction and a rotation angle of the terminal 1000, and can cooperate with the acceleration sensor 1011 to collect a 3D motion of the user on the terminal 1000. Based on the data collected by the gyro sensor 1012, the processor 1001 can serve the following functions: motion sensing (such as changing the UI according to a user's tilt operation), image stabilization during shooting, game control and inertial navigation.

The pressure sensor 1013 may be disposed on a side frame of the terminal 1000 and/or a lower layer of the display screen 1005. When the pressure sensor 1013 is disposed on the side frame of the terminal 1000, a user's holding signal to the terminal 1000 can be detected. The processor 1001 can perform left-right hand recognition or quick operation according to the holding signal collected by the pressure sensor 1013. When the pressure sensor 1013 is disposed on the lower layer of the display screen 1005, the processor 1001 controls an operable control on the UI according to a user's pressure operation on the display screen 1005. The operable control includes at least one of a button control, a scroll bar control, an icon control and a menu control.

The fingerprint sensor 1014 is configured to collect a user's fingerprint. The processor 1001 identifies the user's identity based on the fingerprint collected by the fingerprint sensor 1014, or the fingerprint sensor 1014 identifies the user's identity based on the collected fingerprint. When the user's identity is identified as trusted, the processor 1001 authorizes the user to perform related sensitive operations, such as unlocking the screen, viewing encrypted information, downloading software, paying, and changing settings. The fingerprint sensor 1014 may be disposed on the front, back, or side of the terminal 1000. When the terminal 1000 is provided with a physical button or a manufacturer's Logo, the fingerprint sensor 1014 may be integrated with the physical button or the manufacturer's Logo.

The optical sensor 1015 is configured to collect ambient light intensity. In one embodiment, the processor 1001 may control the display brightness of the display screen 1005 according to the ambient light intensity collected by the optical sensor 1015. Specifically, when the ambient light intensity is high, the display brightness of the display screen 1005 is increased; and when the ambient light intensity is low, the display brightness of the display screen 1005 is decreased. In another embodiment, the processor 1001 may also dynamically adjust shooting parameters of the camera component 1006 according to the ambient light intensity collected by the optical sensor 1015.

The proximity sensor 1016, also referred to as a distance sensor, is disposed on the front panel of the terminal 1000. The proximity sensor 1016 is configured to capture a distance between the user and a front surface of the terminal 1000. In one embodiment, when the proximity sensor 1016 detects that the distance between the user and the front surface of the terminal 1000 becomes gradually smaller, the processor 1001 controls the display screen 1005 to switch from a screen-on state to a screen-off state. When it is detected that the distance between the user and the front surface of the terminal 1000 gradually increases, the processor 1001 controls the display screen 1005 to switch from the screen-off state to the screen-on state.

It will be understood by those skilled in the art that the structure shown in FIG. 10 does not constitute a limitation to the terminal 1000, and may include more or less components than those illustrated, or combine some components or adopt different component arrangements.

In some embodiments, the terminal includes one or more processors, and a volatile or non-volatile memory for storing instructions executable by the processors, wherein the one or more processors are configured to execute the steps executed by the electronic device in the above methods for recommending a multimedia resource.

In some embodiments, the electronic device is provided as a server. FIG. 11 is a schematic structural diagram of a server according to an embodiment of the present disclosure. Significant differences may be generated when the server 1100 has different configurations or performances. The server 1100 may include one or more processors (CPUs) 1101 and one or more memories 1102 storing at least one piece of program code. The at least one piece of program code is loaded and executed by the processor 1101 to implement the methods according to the above respective method embodiments. Of course, the server 1100 may further include components such as a wired or wireless network interface, a keyboard, and an input and output interface for input and output, and the server may further include other components for implementing device functions, which is not repeated here.

In some embodiments, the server includes one or more processors, and a volatile or non-volatile memory for storing instructions executable by the processors, wherein the one or more processors are configured to execute the steps executed by the electronic device in the above methods for recommending a multimedia resource.

In an exemplary embodiment, a non-transitory computer-readable storage medium is also provided, and instructions in the storage medium, when executed by a processor of an electronic device, enable the electronic device to execute the steps in the above methods for recommending a multimedia resource.

In an exemplary embodiment, a computer program product is also provided, and instructions in the computer program product, when executed by a processor of an electronic device, enable the electronic device to execute the steps executed by the electronic device in the above methods for recommending a multimedia resource.

All the embodiments of the present disclosure can be implemented individually or in combination with other embodiments, which are all regarded as the protection scope claimed by the present disclosure.

## Claims

1. A method for recommending a multimedia resource, **characterized in that**, the method comprises:

   acquiring (201) account information and a recommendation parameter corresponding to the account information;
   acquiring (202) a target parameter of each of a plurality of multimedia resources to be recommended based on the account information, the recommendation parameter and resource information of the plurality of multimedia resources, wherein the target parameter indicates a possibility that a terminal corresponding to the target account executes an operation on the multimedia resource in a case that a corresponding multimedia resource is recommended to a target account, and the target account is an account represented by the account information;
   determining (203) at least one multimedia resource with a largest target parameter in the plurality of multimedia resources as a target multimedia resource; and
   recommending (204) the target multimedia resource to the target account.

2. The method according to claim 1, wherein said acquiring (202) the target parameter of each of the multimedia resources to be recommended based on the account information, the recommendation parameter and resource information of the plurality of multimedia resources comprises:

   acquiring a first fusion feature for each of the plurality of multimedia resources to be recommended by fusing an account feature and a multimedia resource feature, wherein the account feature is a feature of the account information and the multimedia resource feature is a feature corresponding to the resource information of the multimedia resource;
   acquiring a first parameter and a second parameter of the multimedia resource respectively based on a recommendation parameter feature and the first fusion feature, wherein the recommendation parameter feature is a feature of the recommendation parameter, the first parameter indicates a possibility that the terminal corresponding to the target account executes a click operation on the multimedia resource in a case that the multimedia resource is recommended to the target account, and the second parameter indicates a possibility that the terminal corresponding to the target account executes the click operation on the multimedia resource and then executes a conversion operation in a case that the multimedia resource is recommended to the target account; and
   acquiring the target parameter of the multimedia resource by fusing the first parameter and the second parameter, optionally, wherein said acquiring the first parameter and the second parameter of the multimedia resource respectively based on the recommendation parameter feature and the first fusion feature comprises:

     acquiring a weight feature of the first fusion feature by performing feature conversion on the recommendation parameter feature; and
     acquiring the first parameter and the second parameter respectively, based on the recommendation parameter feature, the first fusion feature and the weight feature.

3. The method according to claim 2, wherein the method further comprises:

   acquiring a relevant feature based on the account information and the resource information of the multimedia resource, wherein the relevant feature indicates an interaction between the terminal corresponding to the target account and the multimedia resource, and also indicates an interaction between the terminal corresponding to the target account and other multimedia resources which are multimedia resources recommended by the terminal other than the multimedia resource;
   said acquiring the first fusion feature by fusing the account feature and the multimedia resource feature comprises:
   acquiring the first fusion feature by fusing the account feature, the multimedia resource feature and the relevant feature.

4. The method according to claim 1, wherein said acquiring (202) the target parameter of each of the plurality of multimedia resources to be recommended based on the account information, the recommendation parameter and resource information of the plurality of multimedia resources comprises:
acquiring the target parameter of each of the plurality of multimedia resources, based on the account information, the recommendation parameter, the resource information of the plurality of multimedia resources to be recommended and a recommendation model.

5. The method according to claim 4, wherein the recommendation model comprises a feature extraction sub-model, a click prediction sub-model, a conversion prediction sub-model and a fusion sub-model; and said acquiring the target parameter of each of the plurality of multimedia resources, based on the account information, the recommendation parameter, the resource information of the plurality of multimedia resources to be recommended and the recommendation model comprises:

acquiring a first fusion feature for each of the plurality of multimedia resources to be recommended by fusing an account feature and a multimedia resource feature based on the feature extraction sub-model, wherein the account feature is a feature of the account information, and the multimedia resource feature is a feature corresponding to the resource information of the multimedia resource;
acquiring a first parameter of the multimedia resource based on a recommendation parameter feature, the first fusion feature and the click prediction sub-model, wherein the recommendation parameter feature is a feature of the recommendation parameter, and the first parameter indicates a possibility that the terminal corresponding to the target account executes the click operation on the multimedia resource, in a case that the multimedia resource is recommended to the target account;
acquiring a second parameter of the multimedia resource based on the recommendation parameter feature, the first fusion feature and the conversion prediction sub-model, wherein the second parameter indicates a possibility that the terminal corresponding to the target account executes the click operation on the multimedia resource and then executes the conversion operation, in a case that the multimedia resource is recommended to the target account; and
acquiring the target parameter of the multimedia resource by fusing the first parameter and the second parameter based on the fusion sub-model.

6. The method according to claim 5, wherein the recommendation model further comprises a weight acquisition sub-model, and the method further comprises:

acquiring a weight feature of the first fusion feature by performing feature conversion on the recommendation parameter feature based on the weight acquisition sub-model;
said acquiring the first parameter of the multimedia resource based on the recommendation parameter feature, the first fusion feature and the click prediction sub-model comprises:

acquiring a second fusion feature by fusing the first fusion feature and the weight feature based on the click prediction sub-model; and
acquiring the first parameter by fusing the second fusion feature and the recommendation parameter feature based on the click prediction sub-model.

7. The method according to claim 6, wherein the weight acquisition sub-model comprises n weight acquisition layers, the click prediction sub-model comprises n first parameter acquisition layers and n first fusion layers, and an $i^{th}$ first fusion layer corresponds to an $i^{th}$ weight acquisition layer and an $i^{th}$ first parameter acquisition layer respectively, and n is an integer greater than 1 and i is a positive integer not greater than n;

said acquiring the weight feature of the first fusion feature by performing feature conversion on the recommendation parameter feature based on the weight acquisition sub-model comprises:
performing feature conversion on the recommendation parameter feature to acquire the $i^{th}$ weight feature based on the $i^{th}$ weight acquisition layer; and
said acquiring the second fusion feature by fusing the first fusion feature and the weight feature based on the click prediction sub-model comprises:

performing dimension reduction processing on the first fusion feature to acquire a first first dimension reduction feature based on the first first parameter acquisition layer;

fusing the first dimension reduction feature and the first weight feature to acquire a first third fusion feature based on the first first fusion layer; and

performing, for a $j^{th}$ first parameter acquisition layer and a $j^{th}$ first fusion layer, dimension reduction processing on a $(j-1)^{th}$ third fusion feature to acquire a $j^{th}$ first dimension reduction feature based on the $j^{th}$ first parameter acquisition layer; fusing, the $j^{th}$ first dimension reduction feature and a $j^{th}$ weight feature to acquire a $j^{th}$ third fusion feature based on the $j^{th}$ first fusion layer; and repeating the above steps until the second fusion feature is acquired based on an $n^{th}$ first fusion layer, and j is an integer greater than 1 and not greater than n.

8. The method according to any one of claims 5 to 7, wherein the recommendation model further comprises the weight acquisition sub-model, and the method further comprises:

acquiring a weight feature of the first fusion feature by performing feature conversion on the recommendation parameter feature based on the weight acquisition sub-model;

said acquiring the second parameter of the multimedia resource based on the recommendation parameter feature, the first fusion feature and the conversion prediction sub-model comprises:

acquiring a fourth fusion feature by fusing the first fusion feature and the weight feature based on the conversion prediction sub-model; and

acquiring the second parameter by fusing the fourth fusion feature and the recommendation parameter feature based on the conversion prediction sub-model.

9. The method according to claim 8, wherein the weight acquisition sub-model comprises n weight acquisition layers, the conversion prediction sub-model comprises n second parameter acquisition layers and n second fusion layers, and an $i^{th}$ second fusion layer corresponds to an $i^{th}$ weight acquisition layer and an $i^{th}$ second parameter acquisition layer respectively, and n is an integer greater than 1, and i is a positive integer not greater than n;

said acquiring the weight feature of the first fusion feature by performing feature conversion on the recommendation parameter feature based on the weight acquisition sub-model comprises:

performing feature conversion on the recommendation parameter feature to acquire the $i^{th}$ weight feature based on the $i^{th}$ weight acquisition layer;

said acquiring the fourth fusion feature by fusing the first fusion feature and the weight feature based on the conversion prediction sub-model comprises:

acquiring a first second dimension reduction feature by performing dimension reduction processing on the first fusion feature based on the first second parameter acquisition layer;

acquiring a first fifth fusion feature by fusing the first dimension reduction feature and the first weight feature based on the first second fusion layer; and

acquiring the $j^{th}$ second dimension reduction feature by performing, for a $j^{th}$ second parameter acquisition layer and a $j^{th}$ second fusion layer, dimension reduction processing on a $(j-1)^{th}$ fifth fusion feature based on the $j^{th}$ second parameter acquisition layer; acquiring a $j^{th}$ fifth fusion feature by fusing the $j^{th}$ second dimension reduction feature and a $j^{th}$ weight feature based on the $j^{th}$ second fusion layer; and repeating the above steps until the fourth fusion feature is acquired based on an $n^{th}$ second fusion layer, and j is an integer greater than 1 and not greater than n.

10. The method according to any one of claims 5 to 9, wherein the method further comprises:

acquiring a relevant feature based on the account information, the resource information of the multimedia resource and the feature extraction sub-model, wherein the relevant feature indicates the interaction between the terminal corresponding to the target account and the multimedia resource, and also indicates the interaction between the terminal corresponding to the target account and other multimedia resources which are multimedia resources recommended by the terminal other than the multimedia resource;

said acquiring the first fusion feature by fusing the account feature and the multimedia resource feature based on the feature extraction sub-model comprises:

acquiring the first fusion feature by fusing the account feature, the multimedia resource feature and the relevant feature based on the feature extraction sub-model.

11. The method according to any one of claims 4 to 10 , wherein the method further comprises:

acquiring sample data and a sample label corresponding to the sample data, wherein the sample data comprises sample account information, sample resource information of a sample multimedia resource and a sample recommendation parameter corresponding to the sample account information, and the sample label indicates whether a terminal corresponding to the sample account executes an operation on the sample multimedia resource, in a case that the sample multimedia resource is recommended to a sample account;

acquiring a prediction label of the sample multimedia resource based on the sample data and the recommendation model, wherein the prediction label indicates a possibility that the terminal corresponding to the sample account executes the operation on the sample multimedia resource, in a case that the sample multimedia resource is recommended to the sample account; and

training the recommendation model, based on a difference between the prediction label and the sample label.

12. The method according to claim 11, wherein the sample label comprises a first sample label indicating whether the terminal corresponding to the sample account executes a conversion operation on the sample multimedia resource in a case that the sample multimedia resource is recommended to the sample account, and the prediction label comprises a first prediction label indicating a possibility that the terminal corresponding to the sample account executes the conversion operation on the sample multimedia resource in a case that the sample multimedia resource is recommended to the sample account; the recommendation model comprises the feature extraction sub-model, the click prediction sub-model, the conversion prediction sub-model and the fusion sub-model;

said acquiring the prediction label of the sample multimedia resource based on the sample data and the recommendation model comprises:

acquiring a sample fusion feature by fusing a sample account feature and a sample multimedia resource feature based on the feature extraction sub-model, wherein the sample account feature is a feature of the sample account information, and the sample multimedia resource feature is a feature of the sample resource information;

acquiring a second prediction label of the sample multimedia resource based on a recommendation parameter feature corresponding to the sample recommendation parameter, the sample fusion feature and the click prediction sub-model, wherein the second prediction label indicates a possibility that the terminal corresponding to the sample account executes a click operation on the sample multimedia resource in a case that the sample multimedia resource is recommended to the sample account;

acquiring a third prediction label of the multimedia resource based on the sample recommendation parameter feature, the sample fusion feature and the conversion prediction sub-model, wherein the third prediction label indicates a possibility that the terminal corresponding to the sample account executes the click operation on the sample multimedia resource and then executes the conversion operation in a case that the sample multimedia resource is recommended to the sample account; and

acquiring the first prediction label by fusing the second prediction label and the third prediction label based on the fusion sub-model.

13. The method according to claim 12, wherein the sample label further comprises a second sample label indicating whether the terminal corresponding to the sample account executes the click operation on the sample multimedia resource in a case that the sample multimedia resource is recommended to the sample account;

said training the recommendation model based on the difference between the prediction label and the sample label comprises:

training the recommendation model, based on a difference between the first prediction label and the first sample label, and a difference between the second prediction label and the second sample label.

14. An apparatus for recommending a multimedia resource, comprising:

an acquisition unit (801), configured to acquire account information and a recommendation parameter corresponding to the account information; and

the acquisition unit (801) is further configured to acquire a target parameter of each of a plurality of multimedia resources to be recommended based on the account information, the recommendation parameter and resource information of the plurality of multimedia resources, wherein the target parameter indicates a possibility that a terminal corresponding to the target account executes an operation on the multimedia resource in a case that a corresponding multimedia resource is recommended to a target account, and the target account is an account represented by the account information;

a selection unit (802), configured to determine at least one multimedia resource with a largest target parameter in the plurality of multimedia resources as a target multimedia resource; and

a recommendation unit (803), configured to recommend the target multimedia resource to the target account.

**15.** A computer program product, comprising program, **characterized in that**, the program is executed by a processor to execute the following steps:

acquiring (201) account information and a recommendation parameter corresponding to the account information; acquiring (202) a target parameter of each of a plurality of multimedia resources to be recommended based on the account information, the recommendation parameter and resource information of the plurality of multimedia resources, wherein the target parameter indicates a possibility that a terminal corresponding to the target account executes an operation on the multimedia resource in a case that a corresponding multimedia resource is recommended to a target account, and the target account is an account represented by the account information; determining (203) at least one multimedia resource with a largest target parameter in the plurality of multimedia resources as a target multimedia resource; and
recommending (204) the target multimedia resource to the target account.

FIG. 1

| |
|---|
| Acquiring, by an electronic device, account information and a recommendation parameter corresponding to the account information |

201

| |
|---|
| Acquiring, by the electronic device, a target parameter of each multimedia resource based on the account information, the recommendation parameter and resource information of a plurality of multimedia resources to be recommended |

202

| |
|---|
| Determining, by the electronic device, at least one multimedia resource with a largest target parameter in the plurality of multimedia resources as a target multimedia resource |

203

| |
|---|
| Recommending, by the electronic device, the target multimedia resource to a target account |

204

FIG. 2

| Acquiring, by a central server, account information and a recommendation parameter of an application server | 301 |

| Calling, by the central server, for each multimedia resource to be recommended, a feature extraction sub-model in a recommendation model to fuse an account feature and a multimedia resource feature to acquire a first fusion feature | 302 |

| Calling, by the central server, a weight acquisition sub-model in the recommendation model to perform feature conversion on a recommendation parameter feature to acquire a weight feature of the first fusion feature | 303 |

| Calling, by the central server, a click prediction sub-model in the recommendation model to fuse the first fusion feature and the weight feature to acquire a second fusion feature | 304 |

| Calling, by the central server, the click prediction sub-model in the recommendation model to fuse the second fusion feature and the recommendation parameter feature to acquire a first parameter | 305 |

| Calling, by the central server, a conversion prediction sub-model to fuse the first fusion feature and the weight feature to acquire a fourth fusion feature | 306 |

| Calling, by the central server, the conversion prediction sub-model to fuse the fourth fusion feature and the recommendation parameter feature to acquire a second parameter | 307 |

| Calling, by the central server, a fusion sub-model in the recommendation model to fuse the first parameter and the second parameter to acquire a target parameter of the multimedia resource | 308 |

| Determining, by the central server, at least one multimedia resource with a largest target parameter in a plurality of multimedia resources as a selected target multimedia resource | 309 |

| Sending, by the central server, the target multimedia resource to the application server, and recommending, by the application server, the target multimedia resource to a target account | 310 |

FIG. 3

FIG. 4

Terminal | Application server | Central server

501 Sending, by a terminal, a login request to an application server corresponding to the target application based on a target application, the login request carrying a target account

502 Receiving, by the application server, the login request, and verifying whether the target account is an account registered in the application server

502 Sending a verification pass notification to the terminal in a case that the verification is passed

502 Sending a resource recommendation request to a central server in a case that the verification is passed, the resource recommendation request carrying account information of the target account logging in to the application server and a recommendation parameter of the application server

503 Receiving, by the terminal, the verification pass notification and displaying a login success interface based on the target application

504 Receiving, by the central server, the resource recommendation request sent by the application server, and for a plurality of advertisements to be recommended, acquiring a target parameter of each advertisement according to the above steps 302-308

505 Determining, by the central server, at least one advertisement with a largest target parameter in the plurality of advertisements as a target advertisement

505 Sending the target advertisement to the application server

506 Receiving, by the application server, the target advertisement sent by the central server

506 Sending a target advertisement recommendation to the terminal corresponding to the target account

507 Receiving, by the terminal, the target advertisement sent by the application server, and displaying the target advertisement based on the target application

FIG. 5

Acquiring, by a central server, sample data and a sample label corresponding to the sample data ⎯⎯⁓601

Calling, by the central server, a feature extraction sub-model to fuse a sample account feature and a sample multimedia resource feature to acquire a sample fusion feature ⎯⎯⁓602

Calling, by the central server, a click prediction sub-model and acquiring a second prediction label of a sample multimedia resource based on a recommendation parameter feature corresponding to a sample recommendation parameter and the sample fusion feature ⎯⁓603

Calling, by the central server, a conversion prediction sub-model and acquiring a third prediction label of the multimedia resource based on a sample recommendation parameter feature and the sample fusion feature ⎯⁓604

Calling, by the central server, a fusion sub-model to fuse the second prediction label and the third prediction label to acquire a first prediction label ⎯⁓605

Training, by the central server, a recommendation model based on a difference between the first prediction label and a first sample label and a difference between the second prediction label and a second sample label ⎯⁓606

FIG. 6

Acquiring, by a central server, account information and a recommendation parameter of an application server ⌇701

Fusing, by the central server, for each multimedia resource to be recommended, an account feature and a multimedia resource feature to acquire a first fusion feature ⌇702

Acquiring, by the central server, a first parameter and a second parameter of the multimedia resource respectively based on a recommendation parameter feature and the first fusion feature ⌇703

Fusing, by the central server, the first parameter and the second parameter to acquire a target parameter of the multimedia resource ⌇704

Determining, by the central server, at least one multimedia resource with a largest target parameter in a plurality of multimedia resources as a target multimedia resource ⌇705

Sending, by the central server, the target multimedia resource to the application server, and recommending, by the application server, the target multimedia resource to a target account ⌇706

FIG. 7

Apparatus for recommending a
multimedia resource

Acquisition unit ⌒⟋ 801

Selection unit ⌒⟋ 802

Recommendation
unit ⌒⟋ 803

FIG. 8

Apparatus for recommending a multimedia
resource

Conversion
unit ⌒804

Fusion
subunit ⌒8011

Acquisition
subunit ⌒8012

Acquisition unit ⌒⟋801

805⌒ Training unit    Selection unit ⌒⟋802

Recommenda
tion unit ⌒⟋803

FIG. 9

1000

1001
Processor

1002
Memory

1003
Peripheral device interface

1004
Radio frequency circuit

1005
Display screen

1006
Camera component

1007
Audio circuit

1008
Positioning component

1009
Power source

| Acceleration sensor 1011 | Gyro sensor 1012 | Pressure sensor 1013 |
| Fingerprint sensor 1014 | Optical sensor 1015 | Proximity sensor 1016 |

Sensors 1010

FIG. 10

1100

Server

Processor 1101

Memory 1102

FIG. 11

Europäisches
Patentamt

European
Patent Office

Office européen
des brevets

# EUROPEAN SEARCH REPORT

Application Number

EP 22 17 8202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/066922 A1 (XIONG TRUE [US] ET AL) 5 March 2015 (2015-03-05) * paragraphs [0001], [0012], [0021] – [0029], [0035]; figures 1-3 * ----- | 1-15 | INV. G06F16/48 |

TECHNICAL FIELDS SEARCHED (IPC)

G06F

The present search report has been drawn up for all claims

| Place of search | Date of completion of the search | Examiner |
|---|---|---|
| Munich | 14 November 2022 | Thielemann, Benedikt |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 8202

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2022

| Patent document cited in search report | Publication date | Patent family member(s) | Publication date |
|---|---|---|---|
| US 2015066922 A1 | 05-03-2015 | NONE | |